# EUROPEAN PATENT APPLICATION

(11) **EP 2 105 369 A2**
(43) Date of publication of application: **30.09.2009**
(21) Application number: 08021387.9
(22) Date of filing: 09.12.2008
(51) Int. Cl.: B62D 1/187

(54) **Steering apparatus**

(30) Priority: 25.03.2008 JP 2008077094; 25.03.2008 JP 2008077097
(71) Applicant: NSK Ltd., Tokyo 141-8560 (JP)
(72) Inventor: Inoue, Koji, Maebashi-shi Gunma 371-8528 (JP); Katsumata, Mikio, Maebashi-shi Gunma 371-8528 (JP); Tomaru, Masaki, Maebashi-shi Gunma 371-8528 (JP)
(74) Representative: Grünecker, Kinkeldey, Stockmair & Schwanhäusser Anwaltssozietät

(57) **Abstract**

A steering apparatus including an attaching bracket having a slot, respectively, a column supported on the attaching bracket, a fastening rod inserted into the slot and the column, an operation lever attached to the fastening rod, a cam mechanism converting an operating movement of the operation lever into an axial movement of the fastening rod, and a tilt lock mechanism including an eccentric cam rotating in accordance with the operation of the operation lever, an irregularity portion being formed on a cam face of the eccentric cam, and an irregularity portion formed on the cam face. When the operation lever is operated, the cam mechanism moves the fastening rod so as to fasten and clamp the column by the attaching bracket at a desired tilt position and the irregularity portion comes into contact with the attaching bracket so as to regulate an upward movement of the column.

## Description

### BACKGROUND OF THE INVENTION

### Field of the Invention

The present invention relates to a steering apparatus. More particularly, the present invention relates to a steering apparatus in which a tilt position of the column can be adjusted and the column is collapsibly moved to the front side of a vehicle at the time of a secondary collision so that a shock given to a driver can be reduced.

### Description of Related Art

In a steering apparatus in which a tilt position can be adjusted, the column is held by a vehicle attaching bracket so that a tilt position can be adjusted. After the tilt position has been adjusted, an operation lever is operated and turned and a slot for adjusting a tilt position, which is formed in the attaching bracket, and a fastening rod inserted into the column are fastened to each other so as to fasten and clamp the column to the attaching bracket at a desired position.

When a driver collides with a steering wheel at the time of the secondary collision and an impact load is given onto the front side of a vehicle, the attaching bracket is disconnected from a vehicle body and moved onto the front side of the vehicle while being collapsed so that an impact load given to the driver can be reduced.

However, when a fastening force of the fastening rod is weak, in some cases, the column is moved in a tilt direction at the time of the secondary collision. Since the impact load is not smoothly given onto the front side of the vehicle body at the time of the secondary collision, the attaching bracket is not smoothly disconnected from the vehicle body. Accordingly, there is a possibility that the driver is given a strong impact load.

Concerning a tilt lock mechanism for preventing the column from moving in the tilt direction at the time of the secondary collision, United States Patent Publication US 7,021,660 and Japanese Patent Unexamined Publications JP-A-2003-154944 and JP-A-2006-312338 disclose a tilt lock mechanism.
In the tilt lock mechanism disclosed in US 7,021,660, a serrated cam pivotally supported by a shaft attached to a distance bracket bites onto a vehicular rear end face of the attaching bracket to prevent the column from moving in the tilt direction.

The tilt lock mechanism disclosed in JP-A-2003-154944 has a stationary cam having a protruding portion of which arc length is longer than a width of a tilt position adjustment slot. Since thus configured stationary cam has high rigidity, even if the fastening rod receives a strong fastening force, the stationary cam does not bend and a tilt holding force can be designed strong.

In the tilt lock mechanism disclosed in JP-A-2006-312338, a narrow gap is formed between a tilt adjustment slot and an inclined face of a tilt locking piece. Therefore, when a strong impact force is given in a tilt direction at the time of a secondary collision, a roller is moved into the narrow gap so as to function as wedge. Thus, the tilt holding force can be increased.

In the tilt lock mechanism shown in US 7,021,660, the serrated cam is turned by an external force given to a tilt upper side at the time of the secondary collision. Then the serrated cam bites onto an end face on the vehicular rear end face of the attaching bracket, so that the column can be prevented from moving in the tilt direction. However, when the stronger external force is given onto the tilt upper side, the serrated cam is further turned and the bite of the serrated cam into the attaching bracket comes out. Accordingly, there is a possibility that the column can not be prevented from moving to the tilt upper side.

However, the tilt lock mechanism disclosed in JP-A-2003-154944 does not have sufficiently strong tilt holding force.
Further, in the tilt lock mechanism disclosed in JP-A-2006-312338, in order to enhance the tilt holding force, the number of parts is increased and the manufacturing cost is increased.

### SUMMARY OF THE INVENTION

An object of the present invention is to provide a steering apparatus having a tilt lock mechanism which can positively prevent a column from moving to a tilt upper side at the time of the secondary collision.

According to a first aspect of the invention, there is provided a steering apparatus including:
an attaching bracket adapted to be attached to a vehicle body and having a slot, respectively;
a steering shaft to which a steering wheel is attached;
a column supported on the attaching bracket so as to allow a tilt position adjustment and rotatably supporting the steering shaft;
a fastening rod inserted into the slot of the attaching bracket and the column for clamping the column by the attaching bracket at desired tilt position;
an operation lever attached to one end of the fastening rod;
a cam mechanism which is provided in the fastening rod and converts an operating movement of the operation lever into an axial movement of the fastening rod; and
a tilt lock mechanism including:
   an eccentric cam rotating around an axial center thereof which is other than an axis of the fastening rod in accordance with the operation of the operation lever;
   a cam face formed on an outer circumference of the eccentric cam, a distance from the axial center of the eccentric cam to the cam face being changed in a circumferential direction; and
   an irregularity portion formed on the cam face of the eccentric cam,
wherein when the operation lever is operated, the cam mechanism moves the fastening rod so as to fasten and clamp the column by the attaching bracket at a desired tilt position and the irregularity portion comes into contact with the attaching bracket so as to regulate an upward movement of the column.

According to a second aspect of the invention, there is provided the steering apparatus according to the first aspect of the invention, wherein
a stopper is formed on an outer circumference of the eccentric cam next to the irregularity portion,
a distance from the axial center of the eccentric cam to the stopper is longer than the distance from the axial center of the eccentric cam to the irregularity portion, and
the stopper comes into contact with the attaching bracket to regulate the column to move tilt upper side when the eccentric cam is rotated by an external force given at the time of a secondary collision.

According to a third aspect of the invention, there is provided the steering apparatus as set forth in the second aspect of the invention, wherein the eccentric cam includes:
a main driving eccentric cam rotated in accordance with the operation of the operation lever, and coming into contact with a vehicular rear end face of the attaching bracket;
a driven eccentric cam coming into contact with a vehicular rear end face of the other of the attaching bracket; and
a rotation transmitting shaft which transmits a rotation of the main driving eccentric cam to the driven eccentric cam.

According to a fourth aspect of the invention, there is provided the steering apparatus as set forth in the third aspect of the invention, wherein
the column is supported on the attaching bracket so as to allow a telescopic position adjustment,
a telescopic regulating eccentric cam is rotatably supported on the rotational transmission shaft,
an elastic member penetrates through the main driving eccentric cam, the driven eccentric cam and the telescopic regulating eccentric cam so as to rotate them together,
an irregularity portion is formed on a cam face of the telescopic regulating eccentric cam, the distance from the axial center thereof is changed in a circumferential direction, and
the irregularity portion comes into contact with the column so as to regulate a telescopic movement of the column when the column is clamped by the attached brackets.

According to a fifth aspect of the invention, there is provided the steering apparatus according to the fourth aspect of the invention, further including:
a telescopic stopper formed on an outer circumference of the telescopic regulating eccentric cam next to the irregularity portion, wherein
a distance from the axial center of the eccentric cam to the stopper is longer than the distance from the axial center of the eccentric cam to the irregularity portion, and
the stopper comes into contact with the column so as to regulate the telescopic movement of the column.

According to a sixth aspect of the invention, there is provided the steering apparatus as set forth in the first aspect of the invention, wherein the cam mechanism includes:
a stationary cam supported on one end of the fastening rod and pushing one side of the attaching bracket to the column;
a movable cam which opposes to the stationary cam, is supported at one end of the fastening rod, and adapted to rotate together with the operation lever;
cam faces respectively provided on opposing faces of the stationary cam and the movable cam so that the movable cam pushes the stationary cam in an axial direction of the stationary cam;
a detent portion formed in the stationary cam and inwardly engaged with the slot so as to prohibit rotation of the stationary cam relative to the movable cam and to allow sliding movement of the stationary cam along with the slot; and
a protrusion formed in the detent portion and having a sharpened tip end,
wherein the sharpened tip end of the protrusion bites an inner face of the slot so as to prevent the column from moving tilt upper side at the time of a secondary collision.

According to a seventh aspect of the invention, there is provided the steering apparatus according to the sixth aspect of the invention, wherein
the tip ends of the protrusions are formed on both a vehicle body front side and a vehicle body rear side of the detent portion and on both a tilt upper side and a tilt lower side of the detent portion.

According to an eighth aspect of the invention, there is provided the steering apparatus according to the sixth aspect of the invention, wherein
the detent portion is covered with a resin guide for reducing friction between the detent portion and the slot for adjusting the tilt position of the column.

According to a ninth aspect of the invention, there is provided the steering apparatus according to the sixth aspect of the invention, wherein
a protruding member, which is formed separately from the detent portion, having a sharpened tip end is outwardly engaged with an outer circumference of the detent portion.

According to a tenth aspect of the invention, there is provided a steering apparatus including:
an attaching bracket adapted to be attached to a vehicle body and having a slot, respectively;
a steering shaft to which a steering wheel is attached;
a column supported on the attaching bracket so as to allow tilt position adjustment and rotatably supporting the steering shaft;
a fastening rod inserted into the slot of the attaching bracket and the column for clamping the column by the attaching bracket at desired tilt position;
an operation lever attached to one end of the fastening rod;
a cam mechanism which is provided in the fastening rod and converts an operating movement of the operation lever into an axial movement of the fastening rod, the cam mechanism including;
a stationary cam supported on the fastening rod and pushing the attaching bracket to the column;
a movable cam which opposes to the stationary cam, is supported at an end of the fastening rod so as to rotate together with the operation lever;
cam faces respectively provided on opposing faces of the stationary cam and the movable cam, the movable cam pushing the stationary cam in an axial direction of the fastening column;
a detent portion formed on the stationary cam and inwardly engaged with the slot so as to prohibit a rotation of the stationary cam relative to the movable cam and to allow a sliding movement of the stationary cam along with the slot; and
a protrusion formed in the detent portion and having a sharpened tip end,
wherein the tip end bites an inner face of the slot so as to prevent the column from moving tilt upper side at the time of a secondary collision, and
a tilt lock mechanism including:
   an eccentric cam rotating around an axial center thereof which is other than an axis of the fastening rod in accordance with the operation of the operation lever;
   a cam face formed on an outer circumference of the eccentric cam, a distance from the axial center of the eccentric cam to the cam face being changed in a circumferential direction; and
   an irregularity portion formed on the cam face of the eccentric cam,
wherein when the operation lever is operated, the cam mechanism moves the fastening rod so as to fasten and clamp the column by the attaching bracket at a desired tilt position and the irregularity portion comes into contact with the attaching bracket so as to regulate an upward movement of the column.

According to the invention, when the strong external force is given onto a tilt upper side at the time of the secondary collision, the stopper of the eccentric cam comes into contact with the attaching bracket and the eccentric cam can be prevented from further turning. Therefore, the column does not move upward. Accordingly, the column is smoothly disconnected from the attaching bracket onto the vehicle body front side and impact energy is effectively absorbed at the time of the collision and it becomes possible to reduce an impact force given to the driver.

Further, according to one aspect of the present invention, when an impact force acts onto the vehicular front side at the time of a secondary collision, the protrusion having the sharpened tip end bites into an inner face of the slot and a strong resistance force acts against a force in the tilt upper direction generated at the time of the secondary collision. Accordingly, the column does not move in the tilt upper direction. Therefore, the column is smoothly disconnected from the attaching bracket to the vehicular front side and effectively absorbs impact energy generated at the time of the secondary collision and an impact force given to a driver can be reduced. Since the structure is simple and thus the number of parts can be reduced, production cost of parts can be reduced and the manufacturing cost can be reduced.

It should be noted that the attaching bracket may have a left and right plates which are separated each other and hold the column therebetween, or the attaching bracket may be a single integral member in which left and right plates are integrated.

### BRIEF DESCRIPTION OF THE DRAWINGS

Fig. 1 is an overall perspective view showing a steering apparatus of the present invention installed in a vehicle;
Fig. 2 is a front view showing a main portion of the steering apparatus of the embodiment of the present invention;
Fig. 3A is a perspective view showing main portion of the tilt and telescopic clamp device, the tilt lock mechanism and the telescopic lock mechanism of the present invention;
Fig. 3B is a perspective view showing a state in which the operation lever and the fastening rod are removed from the state shown in Fig. 3A;
Fig. 4A is a perspective view showing the tilt lock mechanism, the eccentric cam of the telescopic lock mechanism and the rotation transmitting shaft;
Fig. 4B is a perspective view showing a state in which the rotation transmitting shaft is removed from the state shown in Fig. 4A;
Fig. 4C is a longitudinal cross sectional view of Fig 4A;
Fig. 5 is an enlarged longitudinal cross sectional view showing a connecting structure of the driven eccentric cam and the rod spring;
Fig. 6A is a perspective view showing a main portion of only the tilt and telescopic clamp device;
Fig. 6B is a perspective view showing a state in which the operation lever and the fastening rod are removed from the state shown in Fig. 6A;
Fig. 7 is an enlarged front view showing a main driving eccentric cam single body, a driven eccentric cam single body and an eccentric cam single body of the telescopic lock mechanism of the tilt lock mechanism;
Fig. 8 is a front view showing a main portion of the slot and the periphery of the tilt lock mechanism of the embodiment of the present invention;
Fig. 9 is a sectional view taken on line IX - IX in Fig. 2;
Fig. 10 is a front view showing a main portion of the eccentric cam of the tilt lock mechanism at the time of unclamping the tilt and telescopic clamp device;
Fig. 11A is a front view showing a main portion of the eccentric cam of the tilt lock mechanism at the time of clamping the tilt and telescopic clamp mechanism;
Fig. 11B is a front view showing a main portion of the eccentric cam of the tilt lock mechanism at the time of the secondary collision;
Fig. 12 is a front view of a main portion showing a state in which the eccentric cam of the tilt lock mechanism is further rotated and the stopper of the eccentric cam bites onto an end face on the vehicular rear side of the upper attaching bracket;
Fig. 13A is a front view showing a main portion of the eccentric cam of the telescopic lock mechanism at the time of unclamping the tilt and telescopic clamp device;
Fig. 13B is a front view showing a main portion of the eccentric cam of the telescopic lock mechanism at the time of the secondary collision;
Fig. 14 is a front view showing a main portion in the state that the eccentric cam of the telescopic mechanism is further rotated at the time of the secondary collision and the stopper of the eccentric cam bites onto an outer circumferential face of the outer column;
Fig. 15A is a perspective view showing the stationary cam of Modification 1 of the present invention;
Fig. 15B is a perspective view showing a detent portion provided on the back side of the stationary cam shown in Fig. 15A;
Fig. 15C is a perspective view showing the detent portion inwardly engaging the slot;
Fig. 16 is a front view showing the detent portion inwardly engaging the slot;

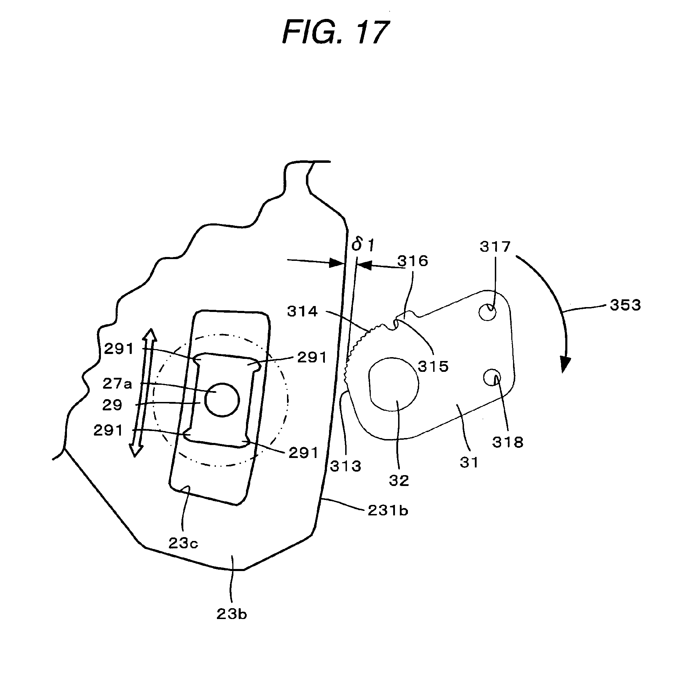

Fig. 17 is a front view showing the slot, the detent portion and the eccentric cam of the tilt lock mechanism at the time of unclamping the tilt and telescopic clamp device;
Fig. 18 is a front view showing the slot, the detent portion and the eccentric cam of the tilt lock mechanism at the time of a secondary collision;
Fig. 19A is a front view showing the slot, the detent portion and the eccentric cam of the tilt lock mechanism of Modification 2 of the present invention;
Fig. 19B is a perspective view showing a resin guide attached to the detent portion in Fig. 19A;
Fig. 20 is a front view showing the slot and the detent portion of Modification 3;
Fig. 21 is a front view showing the slot and the detent of Modification 4 of the present invention;
Fig. 22 is a front view showing the slot and the detent portion of Modification 5 of the present invention, which is modified in the detent portion.;
Fig. 23 is a front view showing the slot and the detent portion of Modification 6 of the present invention;
Fig. 24 is a front view showing the detent portion of Modification 7 of the present invention;
Fig. 25 is a front view showing the detent portion of Modification 8 of the present invention;
Fig. 26 is a front view showing the detent portion of Modification 9 of the present invention;
Fig. 27 is a front view showing the detent portion of Modification 10 of the present invention;
Fig. 28 is a front view showing the slot and the detent portion of Modification 11 of the present invention;
Fig. 29 is a front view showing the slot and the detent portion of Modification 12 of the present invention; and
Fig. 30 is a front view showing the slot and the detent portion of Modification 13 of the present invention.

### DETAILED DESCRIPTION OF EXEMPLARY EMBODIMENTS OF THE PRESENT INVENTION

In the following embodiment, the present invention is applied to a tilt and telescopic type steering apparatus in which both the tilt position and the telescopic position of a steering wheel are adjusted. However, the present invention may be applied to a tilt type steering apparatus in which only the tilt position is adjusted.

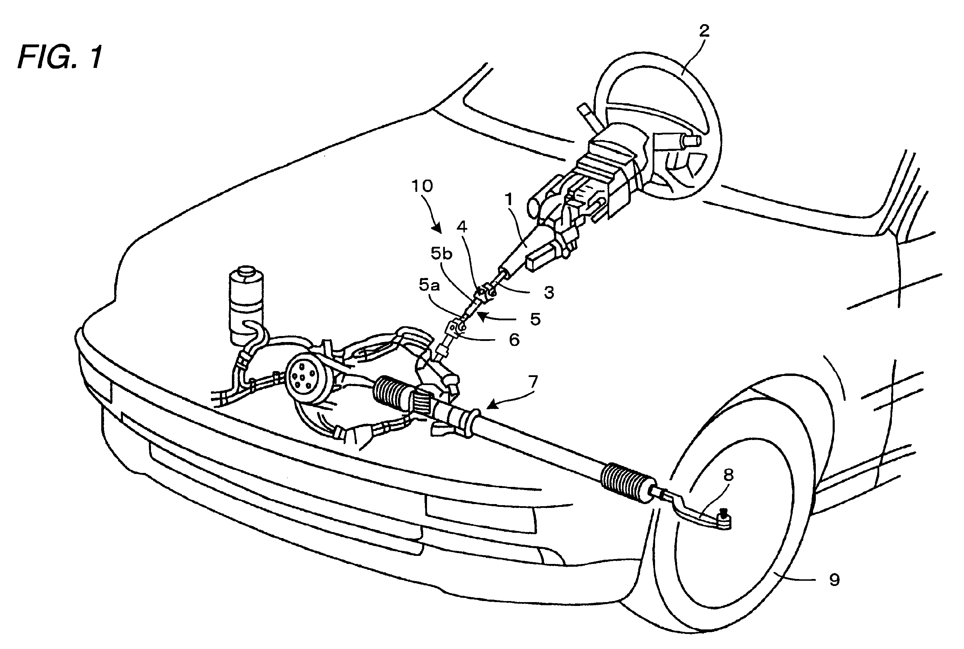

Fig. 1 is an overall perspective view showing a state in which the steering apparatus 10 of the present invention is installed in a vehicle. As shown in Fig. 1, the hollow cylindrical column 1 is attached to a vehicle body. A steering shaft 3 is rotatably supported by the column 1. A steering wheel 2 is attached at the right end (on the rear side of the vehicle body) and an intermediate shaft 5 is connected to the left end (on the front side of the vehicle body) of the steering shaft 3 via a universal joint 4.

The intermediate shaft 5 includes: a solid intermediate inner shaft 5a in which a male spline is formed; and a hollow cylindrical intermediate outer shaft 5b in which a female spline is formed. The male spline of the intermediate inner shaft 5a is engaged with the female spline of the intermediate outer shaft 5b while capable of telescoping (sliding) and also transmitting torque.

The vehicular rear side of the intermediate outer shaft 5b is connected to the universal joint 4 and the vehicle body front side of the intermediate inner shaft 5a is connected to a universal joint 6. The universal joint 6 is connected to a pinion meshed with a rack (not shown) of a steering gear 7.

When a driver operates and turns the steering wheel 2, the torque is transmitted to the steering gear 7 via the steering shaft 3, the universal joint 4, the intermediate shaft 5 and the universal joint 6. Therefore, a tie rod 8 is moved through a rack and pinion mechanism and a steering angle of a wheel 9 can be changed.

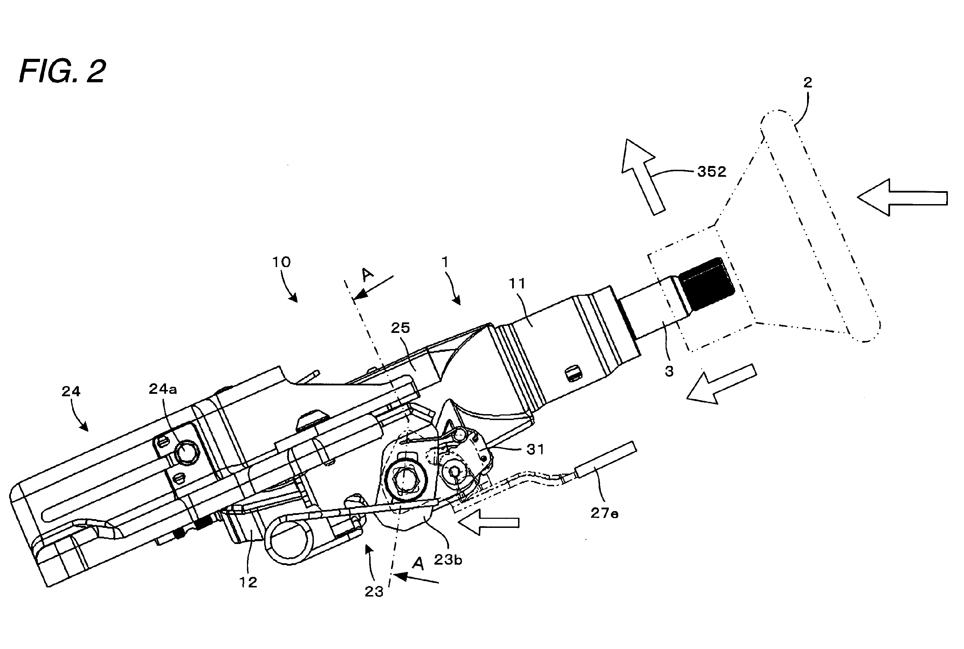

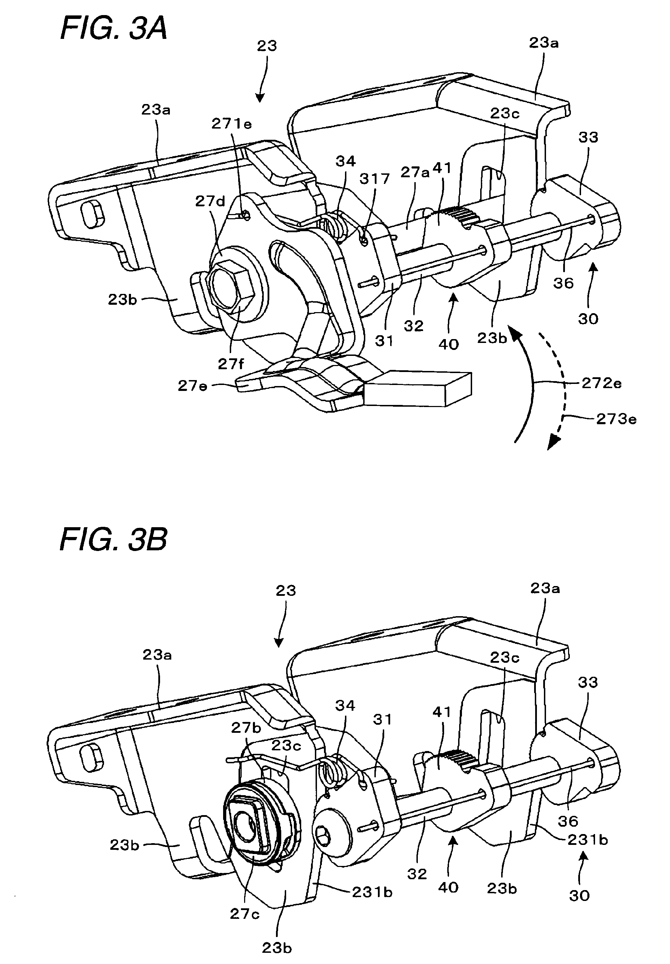

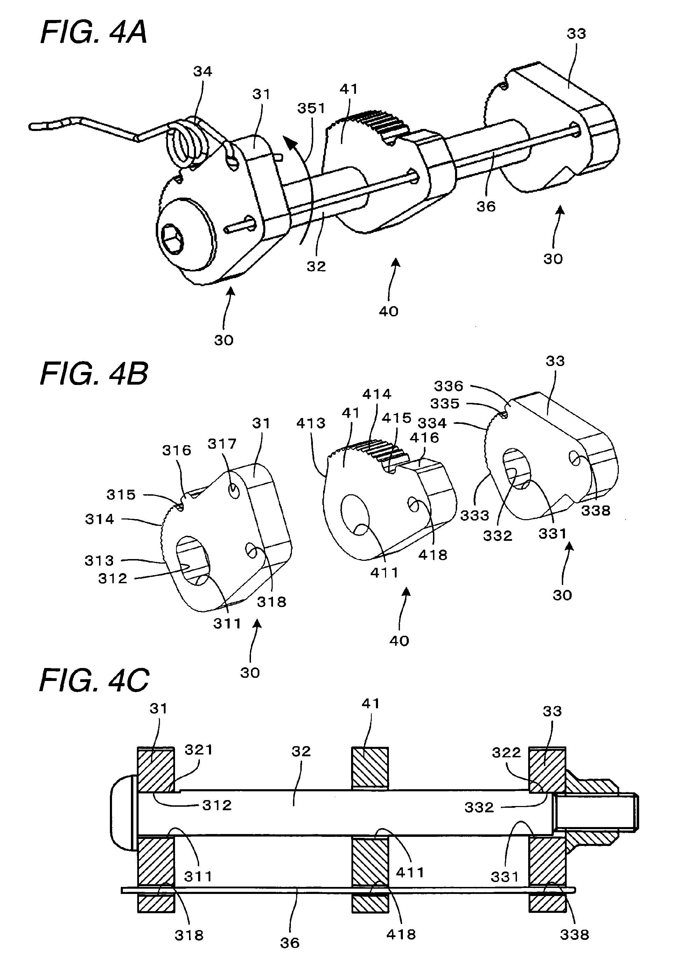

Fig. 2 is a front view showing a main portion of the steering apparatus of the embodiment of the present invention. Fig. 3 is a perspective view showing main portions of the tilt and telescopic clamp device, the tilt lock mechanism and the telescopic lock mechanism of the present invention. Fig. 3B is a perspective view showing a state in which the operation lever and the fastening rod are removed from the state shown in Fig. 3A. Fig. 4 is a view showing a state in which the tilt lock mechanism, the eccentric cam of the telescopic lock mechanism and the rotation transmitting shaft are extracted from the state shown in Fig. 3. Fig. 4A is a perspective view. Fig. 4B is a perspective view showing a state in which the rotation transmitting shaft is removed from the state shown in Fig. 4A. Fig. 4C is a longitudinal cross sectional view of Fig 4A.

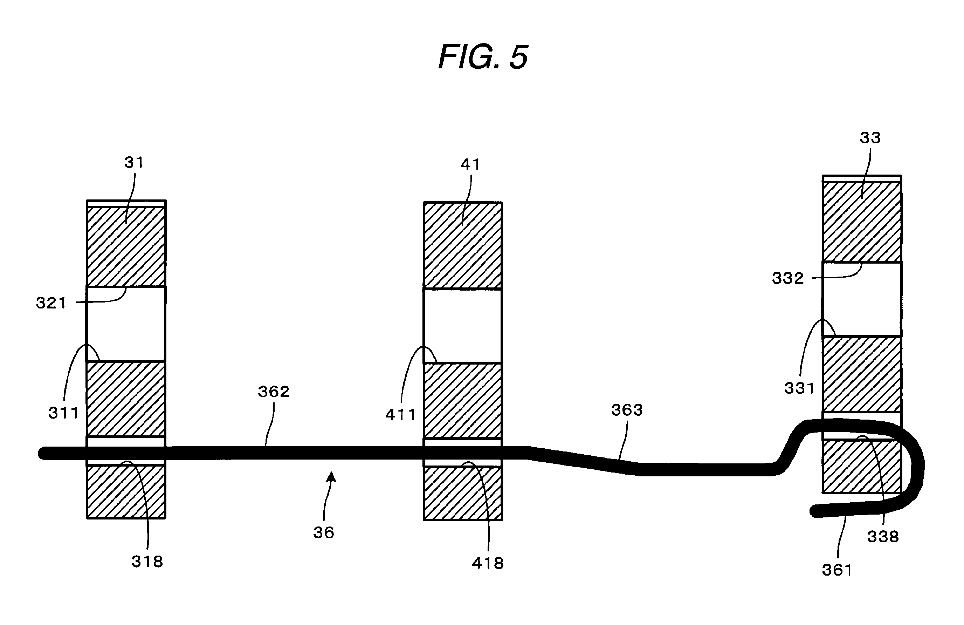

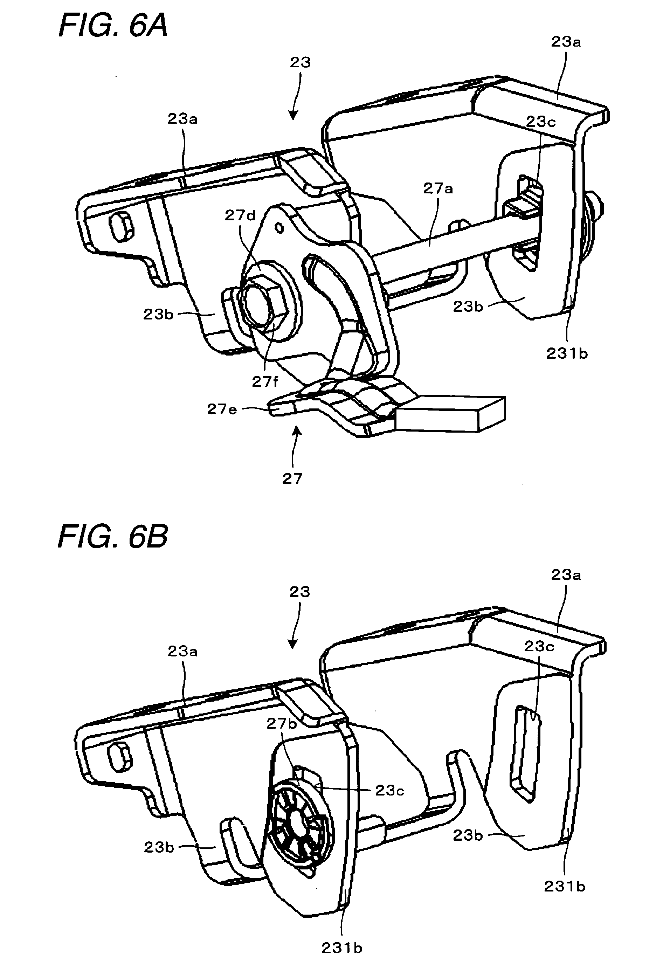

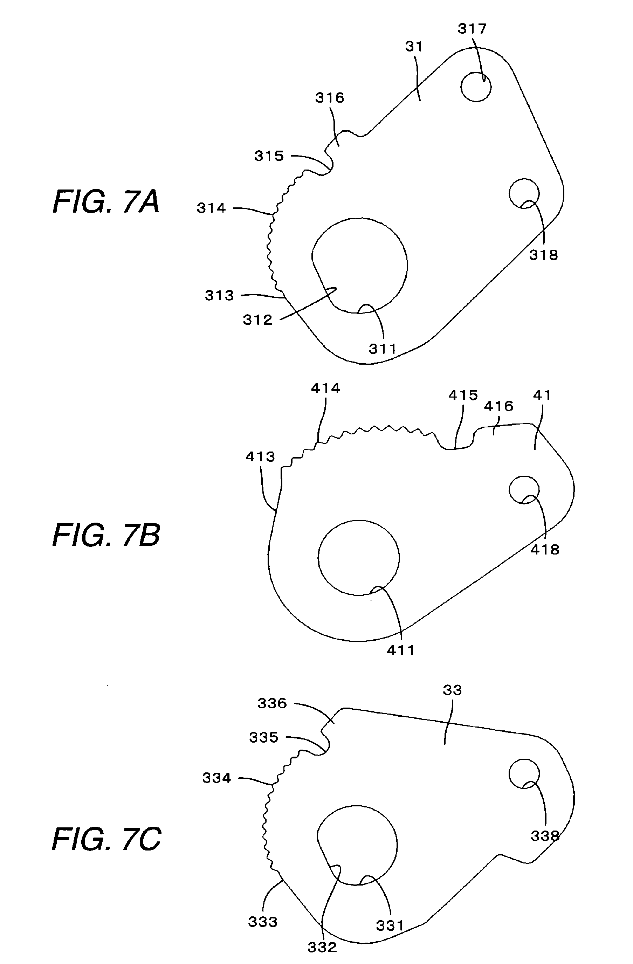

Fig. 5 is an enlarged longitudinal cross sectional view showing a connecting structure of the driven eccentric cam and the rod spring in detail. Fig. 6 is a perspective view, in which the tilt lock mechanism and the telescopic lock mechanism are removed from the state shown in Fig. 3, and showing a main portion of only the tilt and telescopic clamp device. Fig. 6B is a perspective view showing a state in which the operation lever and the fastening rod are removed from the state shown in Fig. 6A. Fig. 7 is an enlarged front view showing a main driving eccentric cam single body, a driven eccentric cam single body and an eccentric cam single body of the telescopic lock mechanism of the tilt lock mechanism.

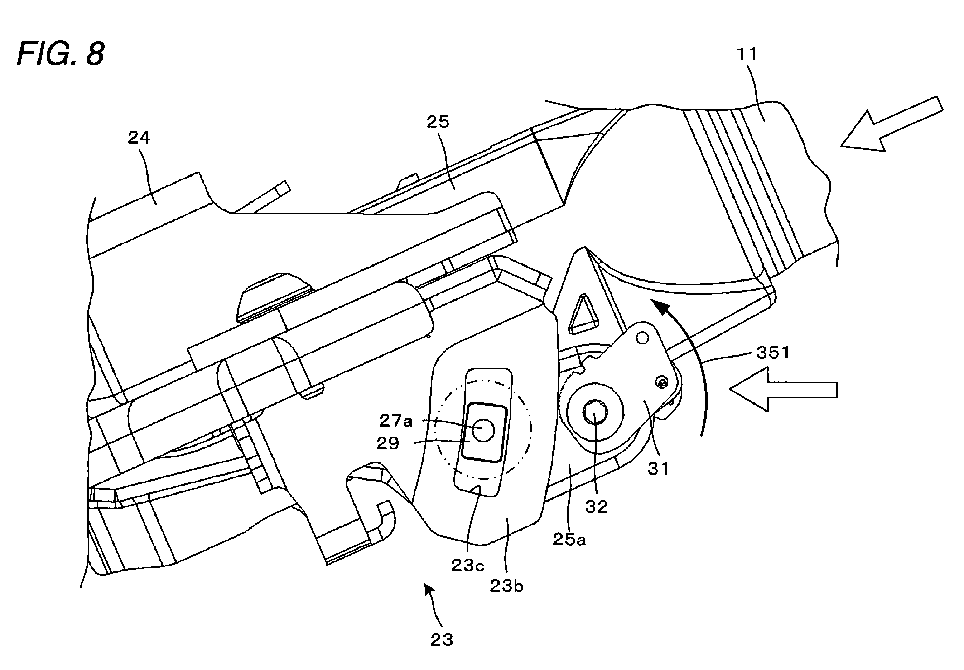

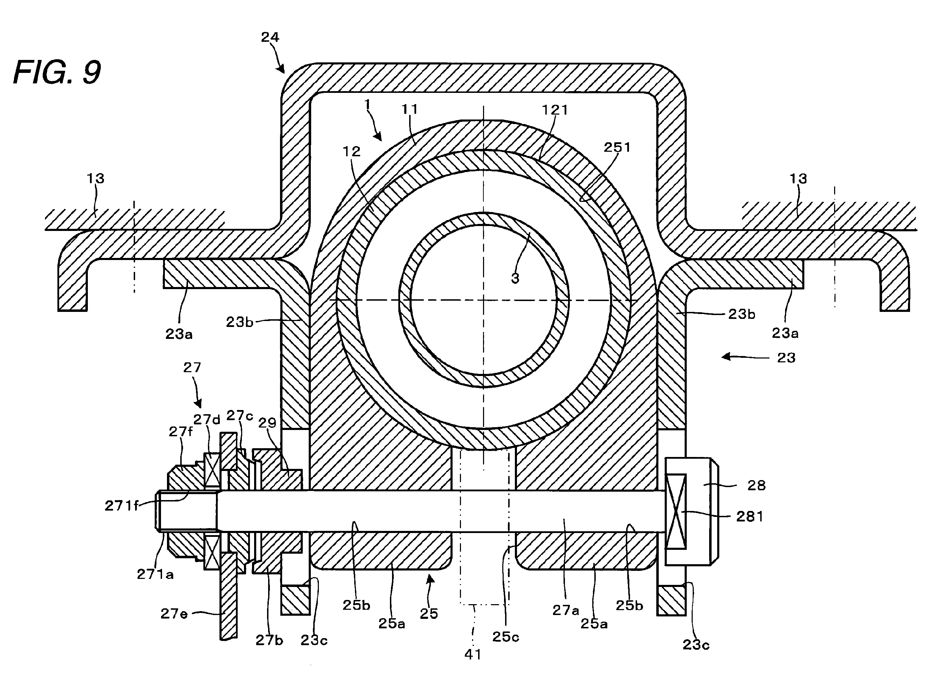

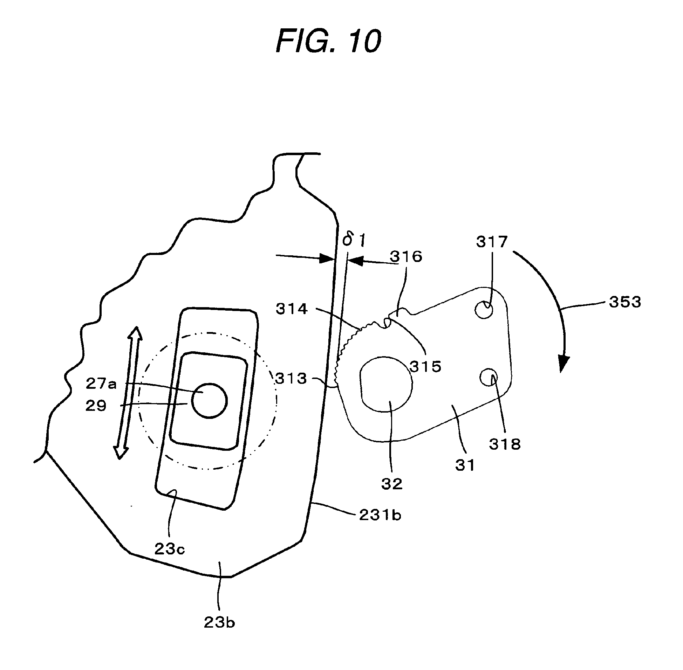

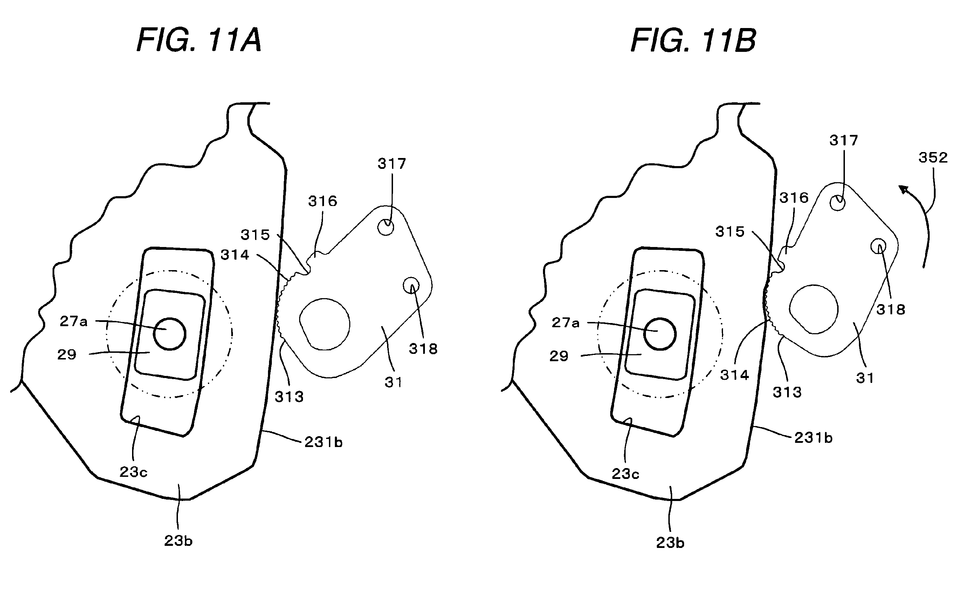

Fig. 8 is a front view showing a main portion of the slot for adjusting a tilt position and the periphery of the tilt lock mechanism of the embodiment of the present invention. Fig. 9 is a sectional view taken on line IX-IX in Fig. 2. Fig. 10 is a front view showing a main portion of the eccentric cam of the tilt lock mechanism at the time of unclamping the tilt and telescopic clamp device. Fig. 11A is a front view showing a main portion of the eccentric cam of the tilt lock mechanism at the time of clamping the tilt and telescopic clamp mechanism. Fig. 11B is a front view showing a main portion of the eccentric cam of the tilt lock mechanism at the time of a secondary collision.

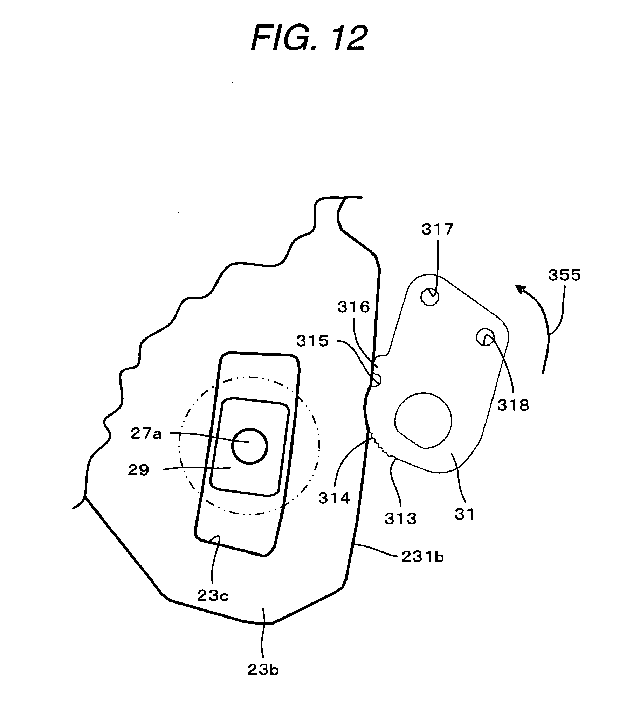

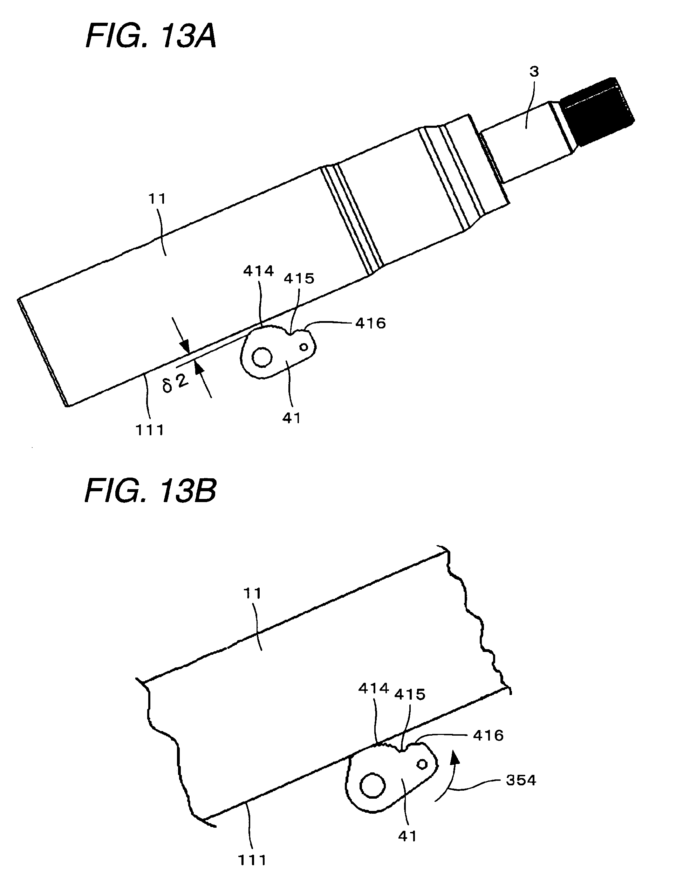

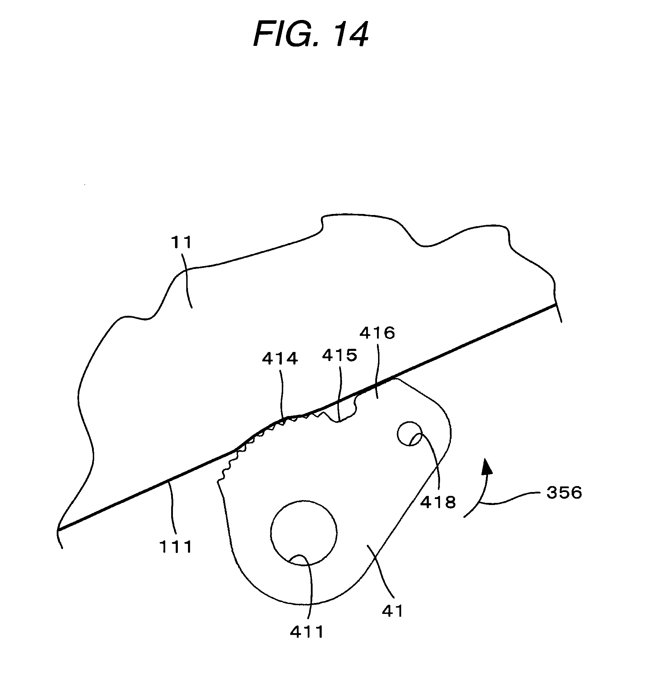

Fig. 12 is a front view of a main portion showing a state in which the eccentric cam of the tilt lock mechanism is further rotated and the stopper of the eccentric cam bites onto a vehicular rear end face of the upper attaching bracket. Fig. 13A is a front view showing a main portion of the eccentric cam of the telescopic lock mechanism at the time of unclamping the tilt and telescopic clamp device. Fig. 13B is a front view showing a main portion of the eccentric cam of the telescopic lock mechanism at the time of the secondary collision. Fig. 14 is a front view showing a main portion in the state in which the eccentric cam of the telescopic mechanism is further rotated at the time of the secondary collision and the stopper of the eccentric cam bites onto an outer circumferential face of the outer column.

As shown in Fig. 2, in the cylindrical column 1 into which the steering shaft 3 is inserted, an inner column 12 is inwardly engaged with the outer column so as to allow telescopic movement of the inner column 12

As shown in Figs. 2, 8 and 9, the outer column 11 is made of aluminum alloy. A column clamp member 25 is integrally formed on a vehicular front side of the outer column 11. This column clamp member 25 extends to the vehicular lower side of the outer column 11. Through-holes 25b, 25b are formed on a pair of side plates 25a, 25a which are opposed to each other in a vehicular width direction of the column clamp member 25. The column clamp member 25 holds an outer circumferential face 121 of the inner column 12 so that the inner column 12 can be telescopically moved.

The column clamp member 25 is supported by an upper attaching bracket 23 through a clamp device 27 so that a tilt position can be adjusted. A vehicular front end portion of the outer column 11 is supported by a lower attaching bracket 24 so as to oscillate around the oscillating pin 24a in a vehicular vertical direction of the vehicle body (on a plane parallel with the plane of paper of Fig. 2).

As shown in Figs. 2 and 9, the lower attaching bracket 24 extends along an upper portion of the column 1 in a longitudinal direction of a vehicle body 13 and arranged so as to cover an upper portion of the upper attaching bracket 23. When a driver collides with the steering wheel 2 and receives a strong impact force at the time of the secondary collision, the upper attaching bracket 23 is disconnected from the lower attaching bracket 24 onto the front side of the vehicle body. Therefore, an impact energy absorbing member (not shown) is plastically deformed and the impact energy given at the time of collision can be absorbed.

As shown in Fig. 9, the upper attaching bracket 23 includes: upper plates 23a, 23a which are detachably attached to the lower vehicle body bracket 24 so as to disconnect from the vehicular front side; and a pair of side plates 23b, 23b. The pair of side plates 23b, 23b are bent downward from both end portions inside in the vehicular width direction of the upper plates 23a, 23a so as to form an L-shape. The pair of side plates 23b, 23b is separated from each other and arranged in parallel to each other.

These side plates 23b, 23b come into contact with a pair of side plates 25a, 25a of the column clamp member 25 in such a manner that the side plates 23b, 23b pinch the pair of side plates 25a, 25a from outside in the vehicular width direction. Between the pair of side plates 25a, 25a, a slit 25c penetrating an inner circumferential hole 251 of the column clamp member 25 is formed. The pair of side plates 23b, 23b includes slots 23c, 23c. The slot 23c is formed so that a major axis extends in a vertical direction.

As shown in Figs. 2, 6 and 9, a clamp device (a tilt and telescopic clamp device) 27 includes a fastening rod 27a which is inserted into the tilt adjustment slots 23c, 23c of the upper attaching bracket 23 and also inserted into the through-holes 25b, 25b of the column clamp member 25.

On a screw side (the left side of Fig. 9) of this fastening rod 27a, a stationary cam 27b, a movable cam 27c, an operation lever 27e, a thrust bearing 27d and an adjustment nut 27f are outwardly engaged with this fastening rod 27a in this order. The female screw 271f formed in an inner diameter portion of the adjustment nut 27f is screwed to a male screw 271a formed at the left end of the fastening rod 27a.

Onto the left end face of the movable cam 27c, the operation lever 27a is fixed. The movable cam 27c and the stationary cam 27e, which are integrally operated by this operation lever 27e, make a cam lock mechanism. On the right side of the fastening rod 27a, a head portion 28 is formed. This head portion 28 comes into contact with an outside of the right side plate 23b.

In the left side outer diameter portion of the head portion 28, a detent portion 281 is formed, the cross section of which is a rectangle and the width of this rectangle is a little smaller than the groove width of the right side slot 23c. The detent portion 281 is engaged in the right side slot 23c. Therefore, the fastening rod 27a is prevented from turning with respect to the upper attaching bracket 23. Further, at the time of adjusting a tilt position, the detent portion 281 makes the fastening rod 27a slide along the right side slot 23c.

The stationary cam 27b and the movable cam 27c make a cam mechanism which converts a rotational operation of the operation lever 27e into an axial movement of the fastening rod 27a. That is, a detent portion 29 formed on a reverse side of the stationary cam 27b is engaged in the left side slot 23c so as to prevent the stationary cam 27b from turning with respect to the left side plate 23b. At the time of adjusting a tilt position of the column 1, the stationary cam 27b slides along the left side slot 23c. When the operation lever 27e is operated and turned with a hand, the movable cam 27c is turned with respect to the stationary cam 27b.

When the operation lever 27e is turned in a clamp direction, a top of a cam face of the movable cam 27c runs onto a top of a cam face of the stationary cam 27b. Accordingly, the fastening rod 27a is drawn onto the left side of Fig. 9 and at the same time the stationary cam 27b is pushed to the right side of Fig. 9.

The right side plate 23b is pushed to the left side of Fig. 9 by the head portion 28 and the right side plate 23b is deformed inwardly. The left side plate 23b is pushed to the right side by the right end face of the stationary cam 27b and the left side plate 23b is deformed inwardly. Then, the left side plate 23b strongly pushes the left side plate 25a of the column clamp member 25. At the same time, the right side plate 23b strongly pushes the right side plate 25a of the column clamp member 25.

As described above, when the side plates 25a, 25a of the column clamp member 25 are fastened by the side plates 23b, 23b of the upper attaching bracket 23, the column clamp member 25 is fastened and clamped to hold a tilt position.
Further, a diameter of an inner circumferential face 251 of the column clamp member 25 is reduced and an outer circumferential face 121 of the inner column 12 is fastened by an inner circumferential face 251 of the column clamp member 25. Accordingly, a displacement in the telescopic direction of the outer column 11 is prevented.
Therefore, with respect to the upper attaching bracket 23, the outer column 11 is fixed, and a displacement in the tilt direction and a displacement in the telescopic direction of the outer column 11 is prevented.

Next, when a driver turns the operation lever 27e in a direction in which the fastening is released, the side plates 23b, 23b of the upper attaching bracket 23 are elastically restored in a direction opposite to the holding direction. Therefore, the outer column 11 becomes freely movable with respect to the side plates 23b, 23b of the upper attaching bracket 23. Under this condition, the detent portion 29, the detent portion 281 and the fastening rod 27a are displaced in the tilt direction while being guided by the slots 23c, 23c. In this way, the tilt position of the steering wheel 2 can be arbitrary adjusted.

Here, the clamp device 27 includes: a tilt lock mechanism 30 for preventing a tilt movement of the column clamp member 25 at the time of the secondary collision; and a telescopic lock mechanism 40 for preventing a telescopic movement of the outer column 11.

As shown in Figs. 3, 4, 5, 7 and 8, the tilt lock mechanism 30 is arranged at a position opposed to the end faces 231b, 231b on the vehicular rear side plates 23b, 23b of the upper attaching bracket 23 all over the vehicular width direction of the side plates 25a, 25a of the column clamp member 25. The tilt lock mechanism 30 includes a main driving eccentric cam 31, a driven eccentric cam 33, a rotation transmission shaft 32 and a torsion coil spring 34.

The circular-rod-shaped rotation transmission shaft 32 is pivotally supported by the side plates 25a, 25a of the column clamp member 25. At both end portions in the vehicular width direction on the outer circumference of the rotation transmission shaft 32, a through-hole 311 which is formed in the main driving eccentric cam 31, and a through hole 331 which is formed in the driven eccentric cam 33, are outwardly engaged. Flat-cutout portions 321, 322 are formed at both end portions in the vehicular width direction of the outer circumference of the rotation transmission shaft 32. The flat-cutout portions 321, 322 are engaged with a partially plane portion 312 formed in the through-hole 311 of the main driving eccentric cam 31 and also engaged with a partially plane portion 332 formed in the through-hole 331 of the driven eccentric cam 32. In this way, a rotation of the main driving eccentric cam 31 is transmitted to the driven eccentric cam 33 through the rotation transmission shaft 32.

At an intermediate position in the vehicular width direction of the outer circumference of the circular-rod-shaped rotation transmission shaft 32, a through-hole 411 formed in the eccentric cam 41 of the telescopic lock mechanism 40 is outwardly engaged. A shape of the cross-section of the through-hole 411 is circular. Since the through-hole 411 is cylindrical, the eccentric cam 41 is pivotally engaged with the outer circumference of the rotation transmission shaft 32 while a gap is being formed in the engagement. As shown by the two-dotted chain line in Fig. 9, the eccentric cam 41 enters the slit 25c of the column clamp member 25.

The main driving eccentric cam 31, the driven eccentric cam 33 and the eccentric cam 41 are plate members, the thickness of which is a little larger than the thickness in the vehicular width direction of the side plates 23b, 23b of the upper attaching bracket 23. On the outer circumferences of the main driving eccentric cam 31, the driven eccentric cam 33 and the eccentric cam 41, and the cam faces 313, 333, 413 are respectively formed. Here, each distances from an axial center of the rotation transmission shaft 32 to the cam faces 313, 333, 413 gradually increases in the circumferential direction. On the cam faces 313, 333, 413, serrated irregularity portions 314, 334, 414 are respectively formed.

On the outer circumferences of the main driving eccentric cam 31, the driven eccentric cam 33 and the eccentric cam 41, clearance grooves 315, 335, 415 are formed next to the serrated irregularity portions 314, 334, 414. Further, next to the clearance grooves 315, 335, 415, stoppers 316, 336, 416 are formed. Each distances from the axial center of the rotation transmission shaft 32 to the respective stoppers 316, 336, 416 is the largest among the respective cam surfaces 313, 333, 413.

As shown in Fig. 3, one end of the torsion coil spring 34 is engaged with a small hole 317 formed in the main driving eccentric cam 31 and the other end of the torsion coil spring 34 is engaged with a small hole 271e formed in the operation lever 27e. Accordingly, when the operation lever 27e is turned in the clamp direction (the direction of the solid line arrow 272e in Fig. 3A), the main driving eccentric cam 31 is pulled by the torsion coil spring 34 and turned in the direction of the solid line arrow 351 in Figs. 4 and 8.

As a result, the irregularity portion 314 of the main driving eccentric cam 31 and the irregularity portion 334 of the driven eccentric cam 33 come into contact with end faces 231b, 231b on the vehicular rear side plates 23b, 23b of the upper attaching bracket 23. Therefore, the column clamp member 25 is prevented from moving in the tilt direction at the time of a second collision.

After the irregularity portions 314, 334 have come into contact with the end faces 231b, 231b, owing to biasing force caused by elastic deformation of the torsion coil spring 34, the irregularity portions 314, 334 are maintained to contact with the end faces 231b, 231b.

When the operation lever 27e is turned in an unclamp direction (the direction of the broken line arrow 273e in Fig. 3A), the torsion coil spring 34 turns the main driving eccentric cam 31 in the direction of the solid line arrow 353 in Fig. 10. Accordingly, a gap δ1 is formed between the irregularity portion 314 of the main driving eccentric cam 31 and the end face 231b of the vehicular rear side plate 23b of the upper attaching bracket 23 and between the irregularity portion 334 of the driven eccentric cam 33 and the end face 231b of the vehicle rear side of the side plate 23b of the upper attaching bracket 23.

As a result, the irregularity portion 314 of the main driving eccentric cam 31 and the irregularity portion 334 of the driven eccentric cam 33 are separated from the end faces 231b, 231b of the vehicular rear side plates 23b, 23b of the upper attaching bracket 23. Therefore, the tilt position of the column clamp member 25 can be adjusted.

As shown in Figs. 3 and 4, the substantially linear rod spring (elastic member) 36 is provided among a small hole 318 formed in the main driving eccentric cam 31, a small hole 418 formed in the eccentric cam 41 and a small hole 338 formed in the driven eccentric cam 33. Accordingly, when the operation lever 27e is turned in the clamp direction (the direction of the arrow 272e in Fig. 3A), the eccentric cam 41 is pulled by the rod spring 36 and turned in the direction of the solid line arrow 351 in Figs. 4 and 8.

As a result, the irregularity portion 414 of the eccentric cam 41 comes into contact with an outer circumferential face 111 of the outer column 11 as shown in Figs. 8 and 13B and the outer column 11 is prevented from moving in the telescopic direction at the time of the secondary collision. After the irregularity portion 414 of the eccentric cam 41 has come into contact with the outer circumferential face 111 of the outer column 11, the rod spring 36 is elastically deformed and the irregularity portion 414 of the eccentric cam 41 is maintained to contact with the outer circumferential face 111.

As shown in Fig. 5, at the right end portion of the rod spring 36 inserted into the small hole 338 of the driven eccentric cam 33, a U-shaped bent portion 361 is formed. Therefore, the right end portion of the rod spring 36 is fixed at the driven eccentric cam 33. The curved portion 363 formed in the middle of the linear portion 362 of the rod spring 36 has a function of appropriately adjusting magnitude of the pushing force of the irregularity portion 414 of the eccentric cam 41 to push the outer circumferential face 111.

As described before, when the operation lever 27e is turned in the unclamp direction (the direction of the broken line arrow 273e in Fig. 3A) and the main driving eccentric cam 31 and the driven eccentric cam 33 are turned by the torsion coil spring 34 in the direction of the solid line arrow 353 in Fig. 10, the eccentric cam 41 is pulled by the rod spring 36 and also turned in the solid line arrow direction 353 in Fig. 10. As a result, as shown in Fig. 12A, a gap δ2 is formed between the irregularity portion 414 of the eccentric cam 41 and the outer circumferential face 111 of the outer column 11. Therefore, the telescopic position of the outer column 11 can be adjusted.

The serrated irregularity portions 314, 334, 414 are arranged so that they can bite onto the end faces 231b, 231b on the vehicular rear side of the upper attaching bracket 23 and the outer circumferential face 111 of the outer column 11. The irregularity portions 314, 334, 414 strongly come into contact with the end faces 231b, 231b on the vehicular rear side of the upper attaching bracket 23 and the outer circumferential face 111 of the outer column 11. Therefore, when the outer column 11 is going to move onto a vehicular upper side (in the direction of the void arrow 352 in Fig. 2), the main driving eccentric cam 31 and the driven eccentric cam 33 are turned a little in the solid line arrow direction 351. Therefore, biting of the irregularity portions is further facilitated.

Since an impact force given to the column clamp member 25 in the tilt direction at the time of the secondary collision is strong, the main driving eccentric cam 31 and the driven eccentric cam 33 are further turned in the direction of the solid line arrow 351 in Fig. 7. Then, the stoppers 316, 336, of which distances from the axial center of the rotation transmission shaft 32 is the longest, bite onto the end faces 231b, 231b on the vehicular rear side of the upper attaching bracket 23. Therefore, the column clamp member 25 can be positively prevented from moving in the tilt direction.

In the same manner, when an impact force given to the outer column 11 in the telescopic direction at the time of the secondary collision is strong, the stopper 416 of the eccentric cam 41 bites onto the outer circumferential face 111 of the outer column 11. Therefore, the outer column 11 can be positively prevented from moving in the telescopic direction.

As shown by the arrow 272e in Fig. 3A, the operation lever 27e is turned in the clamp direction and the outer column 11 is fixed with respect to the upper attaching bracket 23. In this way, the outer column 11 is prevented from being displaced in the tilt direction and the telescopic direction.

At this time, as shown in Fig. 11A, the main driving eccentric cam 31 and the driven eccentric cam 33 come into contact with the end faces 231b, 231b on the vehicular rear side of the upper attaching bracket 23. Therefore, the column clamp member 25 can be positively prevented from moving in the tilt direction. In the same manner, as shown in Fig. 13B, the irregularity portion 414 of the eccentric cam 41 comes into contact with the outer circumferential face 111 of the outer column 11 and the outer column 11 can be prevented from moving in the telescopic direction.

When the secondary collision occurs, as shown in Fig. 11B, the main driving eccentric cam 31 and the driven eccentric cam 33 are turned in the direction of the solid line arrow 352 by an external force given onto the tilt upper side. Therefore, the serrated irregularity portions 314, 334 bite onto the end faces 231b, 231b on the vehicular rear side of the upper attaching bracket 23. Therefore, the clamp member 25 can be prevented from moving in the tilt direction. In the same manner, as shown in Fig. 13B, the eccentric cam 41 is turned in the direction of the solid line arrow 354 by the external force given onto the tilt upper side and the irregularity portion 414 of the eccentric cam 41 bites onto the outer circumferential face 111 of the outer column 11. Therefore, the outer column 11 is prevented from moving in the telescopic direction.

Since an impact force is strong at the time of the secondary collision, as shown in Fig. 12, when the main driving eccentric cam 31 and the driven eccentric cam 33 are further turned in the direction of the solid line arrow 355 by the external force given onto the tilt upper side, the serrated irregularity portions 314, 334 further bite onto the end faces 231b, 231b of the vehicular rear side of the upper attaching bracket 23. When the main driving eccentric cam 31 and the driven eccentric cam 33 are further turned in the direction of the solid line arrow 355, the stoppers 316, 336 come into face-contact with the end faces 231b, 231b of the vehicular rear side of the bracket 23. Accordingly, the rotation of main driving eccentric cam 31 and the driven eccentric cam 33 are stopped. Therefore, the column clamp member 25 can be positively prevented from moving in the tilt direction.

In the same manner, as shown in Fig. 13, when the eccentric cam 41 is turned in the direction of the solid line arrow 354 by the external force given onto the tilt upper side, the irregularity portion 414 of the eccentric cam 41 further bites onto the outer circumferential face 111 of the outer column 11.

Since an impact force given at the time of the secondary collision is strong, as shown in Fig. 14, when the eccentric cam 41 is further turned in the direction of the solid line arrow 356 by the external force given onto the tilt upper side, the irregularity portion 414 further bites onto the outer circumferential face 111 of the outer column 11. When the eccentric cam 41 is further turned in the direction of the solid line arrow 356, the stopper 416 bites onto the outer circumferential face 111 of the outer column 11. Therefore, a rotation of the eccentric cam 41 is stopped and the outer column 11 is positively stopped from moving in the telescopic direction.

The clearance groove 315 of the main driving eccentric cam 31, the clearance groove 335 of the driven eccentric cam 33 and the clearance groove 415 of the eccentric cam 41 have a following function.
That is, when the irregularity portions 314, 334, 414 bite at the time of the secondary collision or when the end faces 231b, 231b on the vehicular rear side of the upper attaching bracket 23, the outer circumferential face 111 of the outer column 11 are greatly deformed. Thus deformed portion of the outer circumferential face 111 can be deformed toward a space formed by the clearance grooves 315, 335, 415. Thus, the irregularity portions 314, 334, 414 can positively bite.

Accordingly, even if the strong force given in the tilt upper direction at the time of the secondary collision is applied, the main driving eccentric cam 31, the driven eccentric cam 33 and the eccentric cam 41 are further turned. Therefore, biting into the upper attaching bracket 23 and the outer column 11 does not come out. Consequently, the outer column 11 and the column clamp member 25 do not move upward.

Therefore, the outer column 11 and the column clamp member 25 are smoothly disconnected from the lower attaching bracket 24 onto the vehicle body front side together with the upper attaching bracket 23. Accordingly, an impact energy absorbing member (not shown) is plastically deformed and impact energy generated at the time of a collision can be effectively absorbed and an impact force acting on a driver can be reduced.

### <MODIFICATION 1>

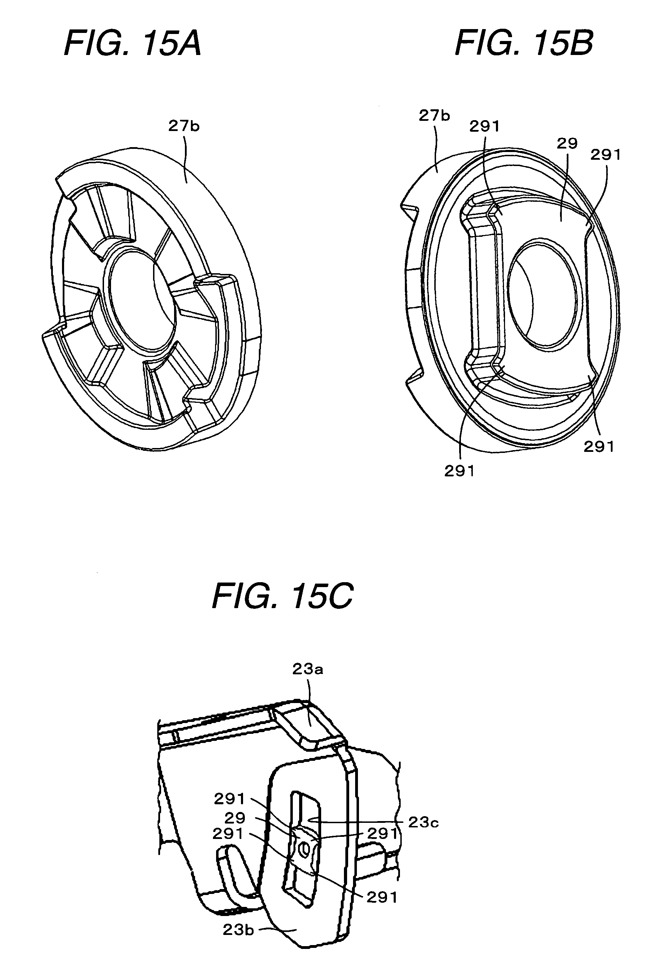

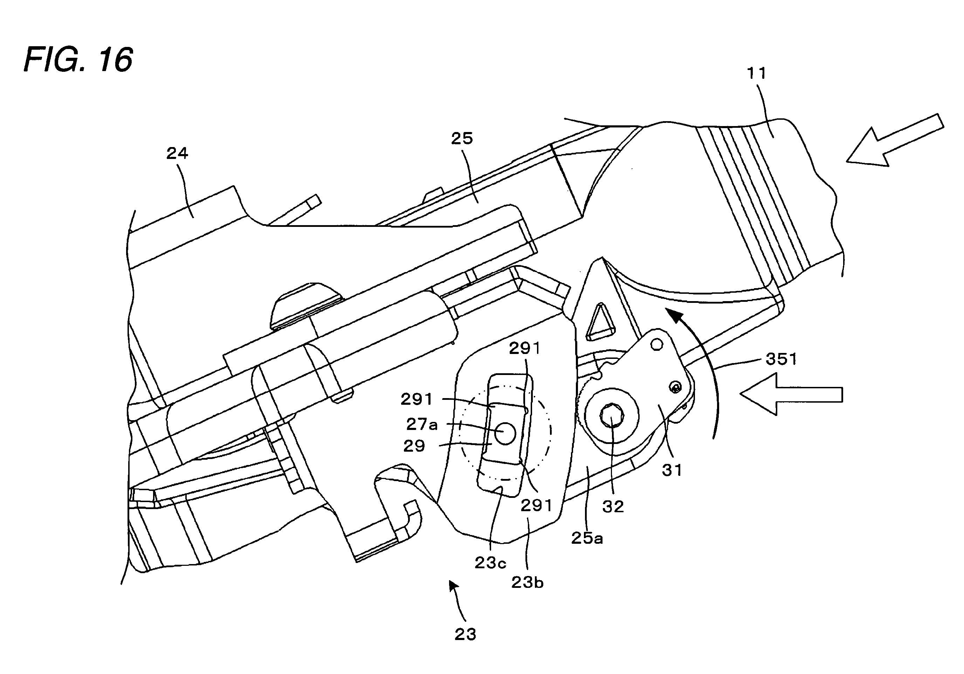

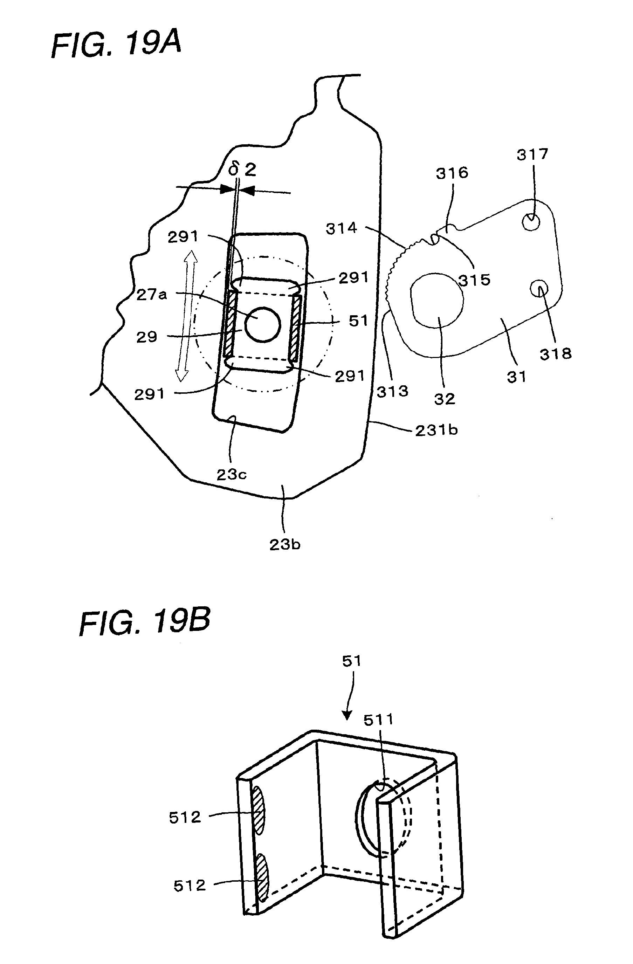

Following modifications 1 through 13 are modifications of the above described steering apparatus. In detail, in the following medications, in addition to the above described steering apparatus, protrusions for surely preventing the column frommoving telescopic direction are formed on the detent portion of the stationary cam.
As shown in Figs. 15, 16, 18 and 19, in a detent portion 29 provided on a back side of the stationary cam 27b, four protrusions 291, 291, 291, 291 having sharpened tip ends, respectively, are formed on both the vehicular front side and the vehicular rear side of the detent portion 29 and on both the tilt upper side and the tilt lower side of the detent portion 29.

As shown by the arrow 272e in Fig. 3A, when the outer column 11 is fixed with respect to the upper attaching bracket 23 by rotating the operation lever 27e in the clamp direction, the outer column 11 is prevented from being displaced in the tilt direction and the telescopic direction. As described above, at this time, the main driving eccentric cam 31 and the driven eccentric cam 33 bite onto the end faces 231b, 231b of the vehicular rear side of the upper attaching bracket 23. Therefore, the column clamp member 25 can be positively prevented from moving in the tilt direction.

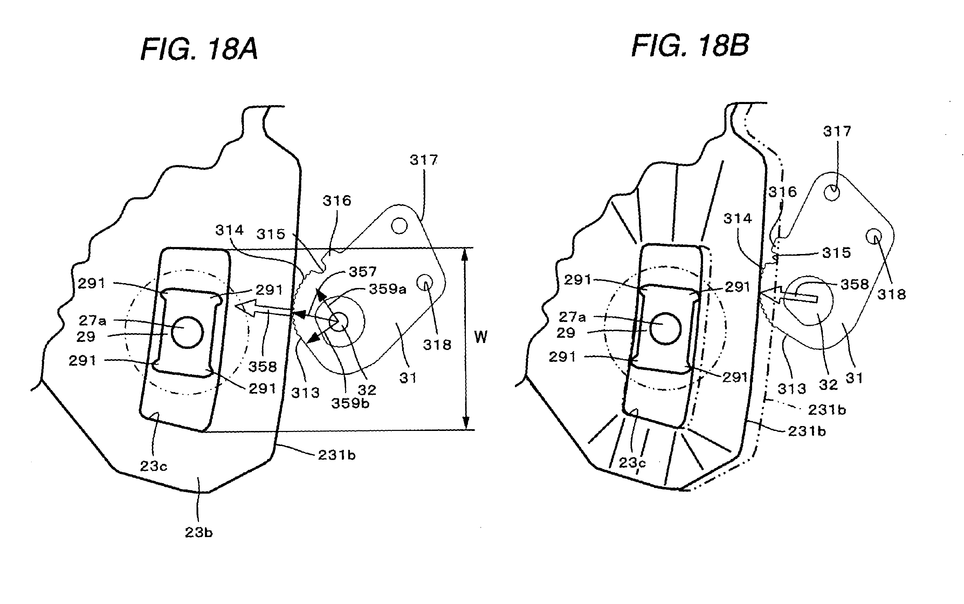

When a secondary collision occurs in this state, as shown in Fig. 18A, a resultant force 357 of a component force 359a in the tilt upper direction acting on the main driving eccentric cam 31 and the driven eccentric cam 33 and a component force 359b in the axial direction of the outer column 11 acts on contact points between the main driving eccentric cam 31 and the vehicular rear end face 231b of the upper attaching bracket 23 and between the driven eccentric cam 33 and the vehicular rear end face 231b of the upper attaching bracket 23.

As a result, by an impact force shown by the void arrow 358 in the direction perpendicular to the end faces 231b, 231b of the vehicular rear side of the upper attaching bracket 23, the side plate 23b of the upper attaching bracket 23 is crushed onto the vehicular front side as shown in Fig. 18B. Therefore, the sharpened tip ends of the four protrusions 291 of the detent portion 29 deeply bite into an inner face of the slot 23c. It is preferable to design that the irregularity portion 314 pushes the end face 231b at an area "W" where the slot 23c is formed. Since such an area of the end face 231c is easily deformed when the irregularity portion 312 pushes.

Accordingly, a strong resistance force acts against a force in the tilt upper direction generated at the time of a secondary collision. Therefore, the outer column 11 and the column clamp member 25 do not move upward in the tilt direction. Consequently, the outer column 11 and the column clamp member 25 are smoothly disconnected from the lower attaching bracket 24 together with the upper attaching bracket 23 and an impact energy absorbing member (not shown) is plastically deformed so as to effectively absorb impact energy generated at the time of the collision. In this way, an impact force acting on the driver can be reduced.

### <MODIFICATION 2>

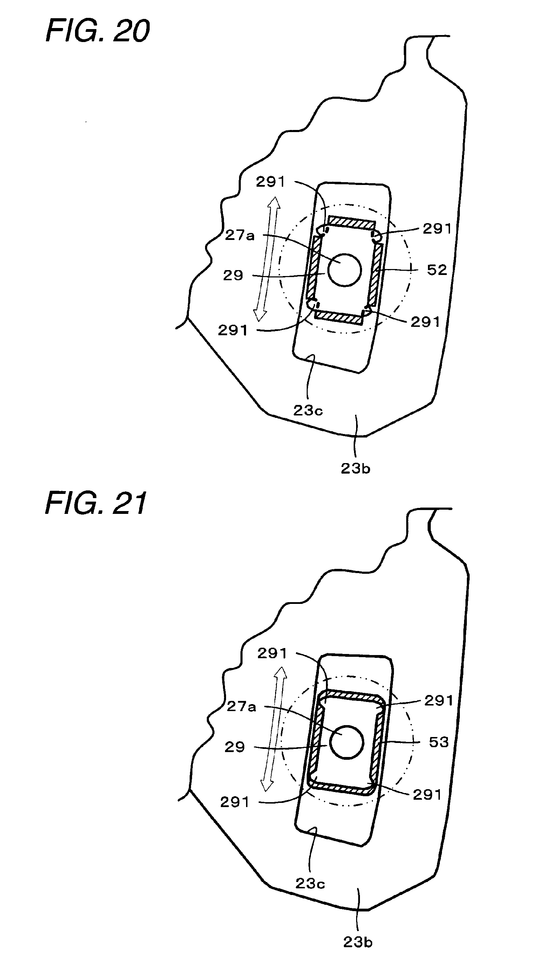

Next, Modification 2 of the present invention will be explained with reference to Figs. 20A, 20B. In the following explanations, only portions different from those of the above modification will be explained and redundant explanations are omitted here. Like reference characters are used to indicate like parts in the explanations.

Modification 2 is a modification of Modification 1. In Modification 2, a resin guide for reducing a coefficient of friction between the detent portion 29 of the stationary cam 27b and the slot 23c is provided on the detent portion 29 of the stationary cam 27b.

At the time of adjusting the tilt position of the column 1, when the detent portion 29 slides along the slot 23c for adjusting the tilt position, since the protrusions 291 having the sharpened tip end are formed in the detent portion 29, the sharpened tip ends of the protrusions 291 come into contact with the slot 23c contact noise may be caused in some cases or the slot 23c or the sharpened tip end of the protrusion 291 may be worn away.

As shown in Figs. 20A and 20B, a resin guide 51 is formed in such a manner that a thin plate made of resin is bent into a C-shape. The resin guide 51 covers a portion of the detent portion between the protrusion 291 of the tilt upper side and the protrusion 291 of the tilt lower side. It is preferable to determine the thickness of the resin guide 51 so that the resin guide 51 can protrude a little (0 ≤ δ2) from the protrusion 291 towards the slot 23c side.

It is preferable that the resin guide 51 is made of resin having low coefficient of friction high abrasion resistance. Examples of the material of the resin guide 51 are: polyacetal, nylon, aramide, PP and PTFE. In the resin guide 51, the circular hole 511 is formed. The fastening rod 27a is inserted into this circular hole 511 and the resin guide 51 is made to adhere to the detent portion 29 with adhesive. Without using adhesive, the resin guide 51 may be simply fitted into the detent portion 29.

Alternatively, the resin guide 51 may be fixed to the detent portion 29 as follows. The engagement protrusions 512, 512 are formed in the resin guide 51. Engagement recess portions (not shown) are formed in the detent portion 29. These engagement protrusions 512, 512 are engaged with the engagement recess portions so as to fix the resin guide 51 to the detent portion 29. Alternatively, the resin guide 51 may be covered with resin by means of injection molding when the detent portion 29 is used as a core member.

When the detent portion 29 is covered with the above described resin guide 51, at the time of usual adjustment of the tilt position, the protrusion 291 does not come into contact with the slot 23c. Accordingly, the noise of contact does not generate and the slot 23c and the protrusion 291 do not wear away. At the time of secondary collision, the resin guide 51 is elastically deformed and the protrusions 291, 291, 291, 291 can bite into an inner face of the slot 23c.

### <MODIFICATION 3>

Next, Modification 3 of the present invention will be explained below with reference to Fig. 20. In the following explanations, only different structural points from the modification described before will be explained and the redundant explanations are omitted here. Like reference characters are used to indicate like parts.

Modification 3 is a modification of Modification 2. In Modification 3, a shape of the resin guide for covering the detent portion 29 is changed from that of Modification 2. As shown in Fig. 20, concerning the resin guide 52 of Modification 3, all four sides of the detent portion 29 are covered with the resin guide. Accordingly, at the time of adjusting the tilt position of the column 1, it is possible to prevent the generation of contacting noise generated when the detent portion 29 comes into contact with an upper end and a lower end of the slot 23c when the detent portion 29 moves at a tilt rising end or a tilt lowering end. Therefore, it is preferable to cover all the four sides of the detent portion 29 with the resin guide.

### <MODIFICATION 4>

Next, Modification 4 of the present invention will be explained below with reference to Fig. 21. In the following explanations, only different structural points from the modification described before will be explained and the redundant explanations are omitted here. Like reference characters are used to indicate like parts.

Modification 4 is a modification of Modification 2. In Modification 4, a shape of the resin guide covering the detent portion 29 is changed. As shown in Fig. 21, concerning the resin guide 53 of Modification 4, all the four sides of the detent portion 29 and the protrusions 291 are covered with the resin guide.

Accordingly, at the time of usual adjustment of the tilt position, the protrusions 291 do not come into contact with the slot 23c. Accordingly, contact noise does not generate and the slot 23c and the protrusions 291 do not wear away. It is possible to prevent the generation of contact noise generated when the detent portion 29 comes into contact with the upper end and the lower end of the slot 23c when the detent portion 29 moves to a tilt rising end and a tilt lowering end. At the time of a secondary collision, the sharpened tip ends of the protrusions 291, 291, 291, 291 break the resin guide 53 and the sharpened tip ends bite into an inner face of the slot 23c.

### <MODIFICATION 5>

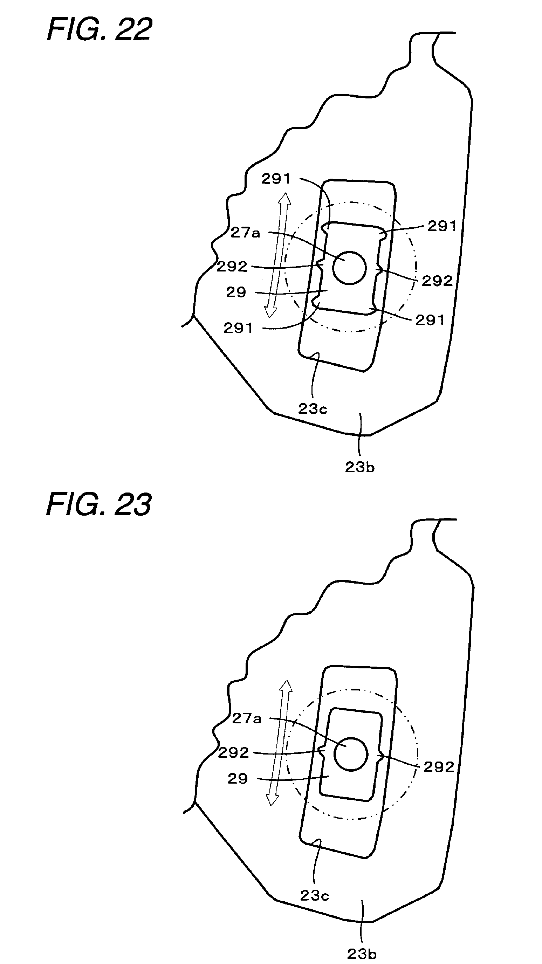

Next, Modification 5 of the present invention will be explained below with reference to Fig. 22. In the following explanations, only different structural points from the modification described before will be explained and the redundant explanations are omitted here. Like reference characters are used to indicate like parts.

Modification 5 is a modification of Modification 1, which is modified by increasing the number of the protrusions 291 of the detent portion 29. In Modification 1, the protrusions 291 are provided on both the vehicular front side and the vehicular rear side of the detent portion 29 and on the tilt upper side and the tilt lower side of the detent portion 29, that is, the protrusions 291 are provided in four portions in total. According to Modification 5, in addition to the configuration of Modification 1, as shown in Fig. 22, on both the vehicular front side and the vehicular rear side of the detent portion 29 and at the intermediate positions on the tilt upper side and the tilt lower side, protrusions 292, 292 having sharpened tip ends are provided. That is, the number of the protrusions is increased by two.

Accordingly, even when an impact force given at the time of a secondary collision is so strong that an amount of the crush of the side plate 23b of the upper attaching bracket 23 to the vehicular front side is large, since the number of the protrusions 291, 292 having the sharpened tip ends is increased, the sharpened tip ends of the protrusions 291, 292b deeply bite into an inner face of the slot 23c and a strong resistance force acts against a force generated in the tilt-upward direction at the time of a secondary collision.

### <MODIFICATION 6>

Next, Modification 6 of the present invention will be explained below with reference to Fig. 23. In the following explanations, only different structural points from the modification described before will be explained and the redundant explanations are omitted here. Like reference characters are used to indicate like parts.

Modification 6 is a modification of Modification 1, which is modified by decreasing the number of the protrusions 291 of the detent portion 29. In Modification 1, the protrusions 291 are provided on both the vehicular front side and the vehicular rear side of the detent portion 29 and on both the tilt upper side and the tilt lower side of the detent portion 29. That is, the protrusions 291 are provided in four portions in total. On contrary, as shown in Fig. 23, on both the vehicular front side and the vehicular rear side of the detent portion 29 and at only the intermediate positions between the tilt upper side and the tilt lower side, the protrusions 292, 292 having the sharpened tip ends are provided only in two portions in total.

Accordingly, even when an impact force given at the time of a secondary collision is so weak that an amount of the crush of the side plate 23b of the upper attaching bracket 23 to the vehicular front side is small, since the number of the protrusions 292 is decreased, the sharpened tip ends of the protrusions 292 deeply bite into an inner face of the slot 23c and a strong resistance force acts against a force generated in the tilt-upward direction at the time of a secondary collision. Although not shown in the drawing, the number of protrusions provided on the vehicle front side may be made different from the number of protrusions provided on the vehicle rear side.

### MODIFICATION 7

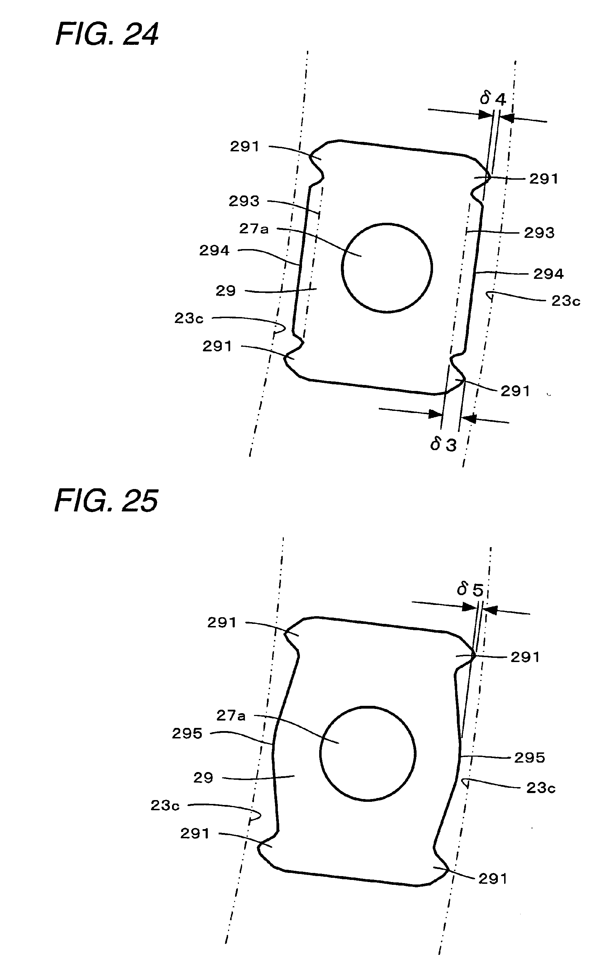

Next, Modification 7 of the present invention will be explained below with reference to Fig. 24. In the following explanations, only different structural points from the modification described before will be explained and the redundant explanations are omitted here. Like reference characters are used to indicate like parts.

Modification 7 is a modification of Modification 1. In Modification 7, a sliding gap between the detent portion 29 and the slot 23c is reduced so as to improve the sliding performance at the time of adjusting a tilt position. That is, in Modification 1, as shown by the two-dotted chain line in Fig. 24, the sliding faces 293, 293 which connects the tilt upper side protrusion 291 with the tilt lower side protrusion 291 are formed at a position retreated from the sharpened tip end of the protrusion 291 by distance δ3.

In Modification 7, as shown by the solid line in Fig. 24, the sliding faces 294, 294 which connects the tilt upper side protrusions 291 with the tilt lower side protrusions 291 are formed at a position retreated from the tip portion of the protrusion 291 by distance δ4 which is smaller than the distance δ3 of Modification 1.

Due to the above structure, by charging grease or lubricant of high viscosity into a sliding gap formed with the slot 23c, a sliding performance of the detent portion 29 is improved and also the protrusions 291 easily bite into an inner face of the adjusting groove 23c.

### <MODIFICATION 8>

Next, Modification 8 of the present invention will be explained below with reference to Fig. 25. In the following explanations, only different structural points from the modification described before will be explained and the redundant explanations are omitted here. Like reference characters are used to indicate like parts.

Modification 8 is a modification of Modification 7. In Modification 8, a sliding distance between the detent portion 29 and the slot 23c is reduced so as to improve the sliding performance at the time of adjusting the tilt position. In Modification 8, as shown by the solid line in Fig. 25, the sliding faces 295, 295 which connects the tilt upper side protrusions 291 with the tilt lower side protrusions 291 are formed into an arc shape protruding to the slot 23c side. Accordingly, a distance δ5 from the sharpened tip end of the protrusion 291 to the sliding face 295 can be made to come close to zero.

Due to this configuration, a contact point between the sliding face 295 and the slot 23c becomes a vertex of an arc. Accordingly, a distance (a distance in the vertical direction in Fig. 25) from the contact point, which is vertex of the arc, to the protrusion 291 can be sufficiently ensured. Accordingly, at the time of a secondary collision, an impact load can be sufficiently loaded on the protrusion 291. Therefore, in this detent portion 29, the sharpened tip end of the protrusion 291 easily bites into an inner face of the slot 23c and the sliding performance at the time of adjusting a tilt position is improved.

### <MODIFICATION 9>

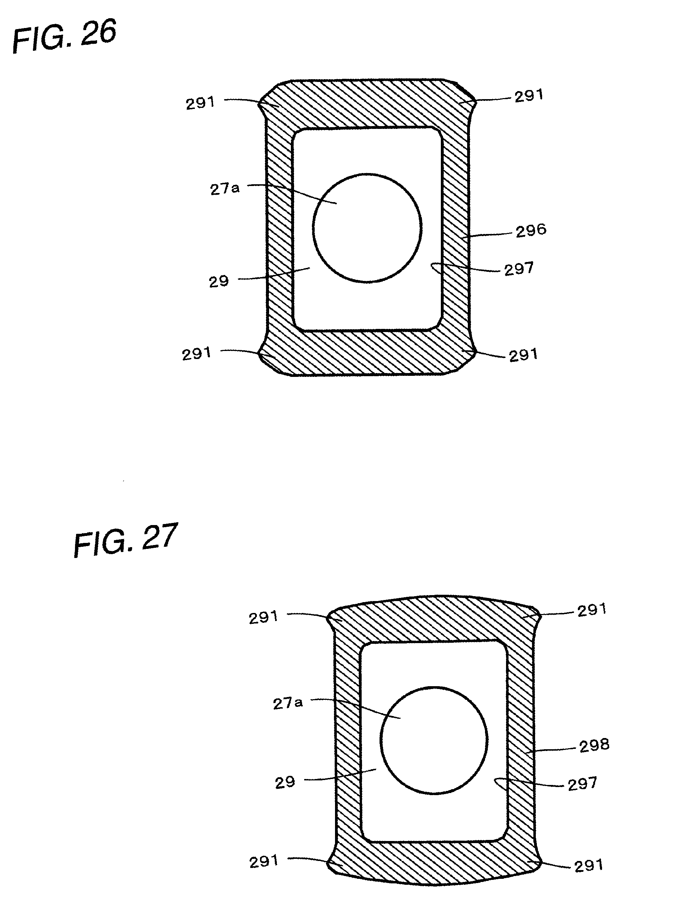

Next, Modification 9 of the present invention will be explained below with reference to Fig. 26. In the following explanations, only different structural points from the modification described before will be explained and the redundant explanations are omitted here. Like reference characters are used to indicate like parts.

Modification 9 is a modification of Modification 1. In Modification 9, the detent portion 29 and the protrusion 291 are formed as parts different from each other. In Modification 9, as shown by the hatching in Fig. 26, a protrusion member 296 (having a rectangular hole 297 at the center) having four protrusions 291 is formed as a part different from the detent portion 29 and press-fitted into a rectangular outer circumference of the detent portion 29. Accordingly, it is possible to decrease the hardness of the detent portion 29 and increase the hardness of the protrusion member 296 of which shape can be simple.

### <MODIFICATION 10>

Next, Modification 10 of the present invention will be explained below with reference to Fig. 27. In the following explanations, only different structural points from the modification described before will be explained and the redundant explanations are omitted here. Like reference characters are used to indicate like parts.

Modification 10 is a modification of Modification 9. In Modification 10, the detent portion 29 and the protrusion 291 are formed as parts different from each other. In Modification 10, as shown by the hatching in Fig. 27, a protrusion member 298 (having a rectangular hole 297 at the center) having four protrusions 291 is formed as a part different from the detent portion 29 and press-fitted into a rectangular outer circumference of the detent portion 29.
Both the tilt upper side and the tilt lower side of the protrusion member 298 are swelled into an arcuate shape. Accordingly, it is possible to enhance the mechanical strength when the protrusion member 298 comes into contact with an upper end and a lower end of the slot 23c at the tilt rising end and the tilt lowering end at the time of adjusting a tilt position of the column 1. Further, by an impact force generated at the time of a secondary collision, a groove width of the slot 23c is reduced. Accordingly, the mechanical strength in the holding direction (the lateral direction in Fig. 27) is enhanced when the protrusion 291 of the protrusion member 298 bites into an inner face of the slot 23c.

### <MODIFICATION 11>

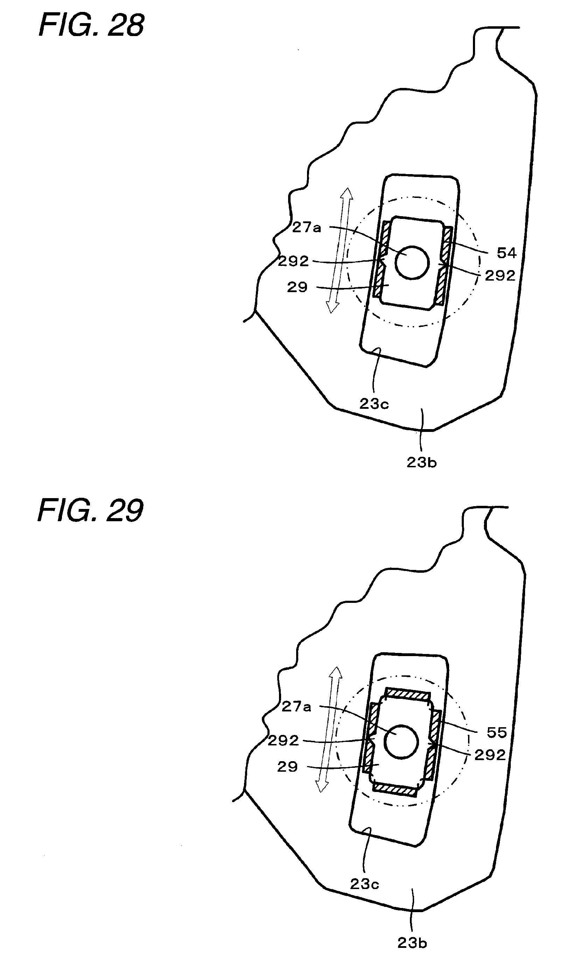

Next, Modification 11 of the present invention will be explained below with reference to Fig. 28. In the following explanations, only different structural points from the modification described before will be explained and the redundant explanations are omitted here. Like reference characters are used to indicate like parts.

Modification 11 is a modification of Modification 6. In Modification 11, a resin guide for reducing a coefficient of friction between the detent portion 29 of the stationary cam 27b and the slot 23c covers the detent portion 29 of the stationary cam 27a.

In the detent portion 29 of Modification 6, the protrusions 292, 292 are formed only at the intermediate positions on the tilt upper side and the tilt lower side and total number of the protrusions is two. Therefore, the detent portion 29 tends to fall down with respect to the slot 23c. Accordingly, it is particularly necessary to provide the resin guide.

In Modification 11, as shown in Fig. 28, both faces on the vehicular front side and the vehicular rear side of the detent portion 29 are covered with the resin guide 54 which completely covers the protrusions 292 and is formed by bending a thin resin plate into a C-shape. The material, the shape, the fixing method of fixing the resin guide 54 to the detent portion 29 and the action of the resin guide 54 are the same as those of Modification 2.

### <MODIFICATION 12>

Next, Modification 12 of the present invention will be explained below with reference to Fig. 29. In the following explanations, only different structural points from the modification described before will be explained and the redundant explanations are omitted here. Like reference characters are used to indicate like parts.

Modification 12 is a modification of Modification 11. In Modification 12, a shape of the resin guide covering the detent portion 29 is changed. As shown in Fig. 29, in Modification 12, the resin guide 55 covers all the four sides of the detent portion 29. Accordingly, at the time of adjusting the tilt position of the column 1, it is possible to prevent the generation of contacting noise generated when the detent portion 29 comes into contact with an upper end and a lower end of the slot 23c at a tilt rising end and a tilt lowering end. For this reason, all the four sides of the detent portion 29 are covered with the resin guide.

### <MODIFICATION 13>

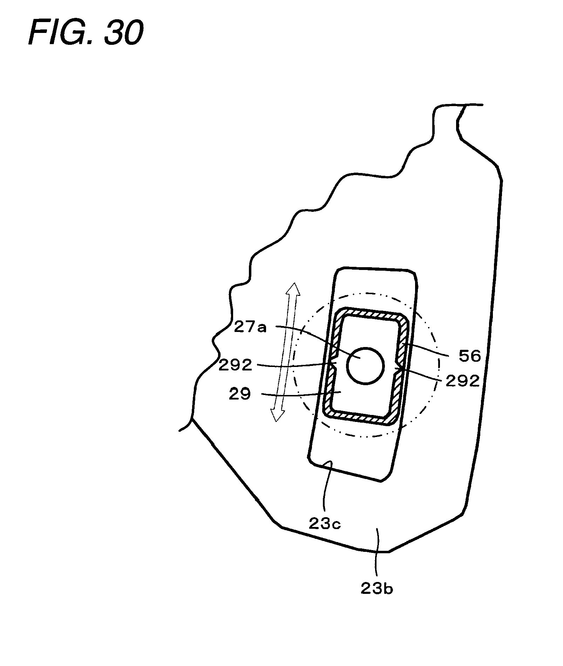

Next, Modification 13 of the present invention will be explained below with reference to Fig. 30. In the following explanations, only different structural points from the modification described before will be explained and the redundant explanations are omitted here. Like reference characters are used to indicate like parts.

Modification 13 is a modification of Modification 11. In Modification 13, a shape of the resin guide covering the detent portion 29 is changed. As shown in Fig. 30, in Modification 13, the resin guide 56 completely covers all the four sides of the detent portion 29 and the protrusions 292.

Accordingly, at the time of usual adjustment of the tilt position, the protrusions 292 do not at least come into contact with the slot 23c. Therefore, the contact noise is not generated and the slot 23c and the protrusions 292 do not wear away.

According to the configuration, the generation of contacting noise can be prevented when the detent portion 29 comes into contact with an upper end and a lower end of the slot 23c at a tilt rising end and a tilt lowering end. In addition, at the time of a secondary collision, the protrusions 292, 292 break the resin guide 56 and bite into an inner face of the slot 23c.

In the embodiment and various modifications described above, in the column 1, the outer column 11 arranged on the vehicular rear side is inwardly, slidably engaged with the inner column arranged on the vehicle body front side. However, the outer column may be arranged on the vehicle body front side and the inner column may be arranged on the vehicular rear side and the outer column may be supported by the vehicle body so that the tilt position can be adjusted.

## Claims

1. A steering apparatus comprising:
an attaching bracket adapted to be attached to a vehicle body and having a slot, respectively;
a steering shaft to which a steering wheel is attached;
a column supported on the attaching bracket so as to allow a tilt position adjustment and rotatably supporting the steering shaft;
a fastening rod inserted into the slot of the attaching bracket and the column for clamping the column by the attaching bracket at desired tilt position;
an operation lever attached to one end of the fastening rod;
a cam mechanism which is provided in the fastening rod and converts an operating movement of the operation lever into an axial movement of the fastening rod; and
a tilt lock mechanism comprising:
an eccentric cam rotating around an axial center thereof which is other than an axis of the fastening rod in accordance with the operation of the operation lever;
a cam face formed on an outer circumference of the eccentric cam, a distance from the axial center of the eccentric cam to the cam face being changed in a circumferential direction; and an irregularity portion formed on the cam face of the eccentric cam,
wherein when the operation lever is operated, the cam mechanism moves the fastening rod so as to fasten and clamp the column by the attaching bracket at a desired tilt position and the irregularity portion comes into contact with the attaching bracket so as to regulate an upward movement of the column.

2. The steering apparatus according to claim 1, wherein
a stopper is formed on an outer circumference of the eccentric cam next to the irregularity portion,
a distance from the axial center of the eccentric cam to the stopper is longer than the distance from the axial center of the eccentric cam to the irregularity portion, and
the stopper comes into contact with the attaching bracket to regulate the column to move tilt upper side when the eccentric cam is rotated by an external force given at the time of a secondary collision.

3. The steering apparatus according to claim 2, wherein the eccentric cam comprises:
a main driving eccentric cam rotated in accordance with the operation of the operation lever, and coming into contact with a vehicular rear end face of the attaching bracket;
a driven eccentric cam coming into contact with a vehicular rear end face of the other of the attaching bracket; and
a rotation transmitting shaft which transmits a rotation of the main driving eccentric cam to the driven eccentric cam.

4. The steering apparatus according to claim 3, wherein
the column is supported on the attaching bracket so as to allow a telescopic position adjustment,
a telescopic regulating eccentric cam is rotatably supported on the rotational transmission shaft,
an elastic member penetrates through the main driving eccentric cam, the driven eccentric cam and the telescopic regulating eccentric cam so as to rotate them together,
an irregularity portion is formed on a cam face of the telescopic regulating eccentric cam, the distance from the axial center thereof is changed in a circumferential direction, and
the irregularity portion comes into contact with the column so as to regulate a telescopic movement of the column when the column is clamped by the attached bracket.

5. The steering apparatus according to claim 4, further comprising:
a telescopic stopper formed on an outer circumference of the telescopic regulating eccentric cam next to the irregularity portion, wherein
a distance from the axial center of the eccentric cam to the stopper is longer than the distance from the axial center of the eccentric cam to the irregularity portion, and
the stopper comes into contact with the column so as to regulate the telescopic movement of the column.

6. The steering apparatus according to claim 1, wherein the cam mechanism comprises:
a stationary cam supported on one end of the fastening rod and pushing one side of the attaching bracket to the column;
a movable cam which opposes to the stationary cam, is supported at one end of the fastening rod, and adapted to rotate together with the operation lever;
cam faces respectively provided on opposing faces of the stationary cam and the movable cam so that the movable cam pushes the stationary cam in an axial direction of the stationary cam;
a detent portion formed in the stationary cam and inwardly engaged with the slot so as to prohibit rotation of the stationary cam relative to the movable cam and to allow sliding movement of the stationary cam along with the slot; and
a protrusion formed in the detent portion and having a sharpened tip end,
wherein the sharpened tip end of the protrusion bites an inner face of the slot so as to prevent the column from moving tilt upper side at the time of a secondary collision.

7. The steering apparatus according to claim 6, wherein
the tip ends of the protrusions are formed on both a vehicle body front side and a vehicle body rear side of the detent portion and on both a tilt upper side and a tilt lower side of the detent portion.

8. The steering apparatus according to claim 6, wherein
the detent portion is covered with a resin guide for reducing friction between the detent portion and the slot for adjusting the tilt position of the column.

9. The steering apparatus according to claim 6, wherein
a protruding member, which is formed separately from the detent portion, having a sharpened tip end is outwardly engaged with an outer circumference of the detent portion.

10. A steering apparatus comprising:
an attaching bracket adapted to be attached to a vehicle body and having a slot, respectively;
a steering shaft to which a steering wheel is attached;
a column supported on the attaching bracket so as to allow tilt position adjustment and rotatably supporting the steering shaft;
a fastening rod inserted into the slot of the attaching bracket and the column for clamping the column by the attaching bracket at desired tilt position;
an operation lever attached to one end of the fastening rod;
a cam mechanism which is provided in the fastening rod and converts an operating movement of the operation lever into an axial movement of the fastening rod, the cam mechanism comprising;
a stationary cam supported on the fastening rod and pushing the attaching bracket to the column;
a movable cam which opposes to the stationary cam, is supported at an end of the fastening rod so as to rotate together with the operation lever;
cam faces respectively provided on opposing faces of the stationary cam and the movable cam, the movable cam pushing the stationary cam in an axial direction of the fastening column;
a detent portion formed on the stationary cam and inwardly engaged with the slot so as to prohibit a rotation of the stationary cam relative to the movable cam and to allow a sliding movement of the stationary cam along with the slot; and
a protrusion formed in the detent portion and having a sharpened tip end,
wherein the tip end bites an inner face of the slot so as to prevent the column from moving tilt upper side at the time of a secondary collision, and
a tilt lock mechanism comprising:
an eccentric cam rotating around an axial center thereof which is other than an axis of the fastening rod in accordance with the operation of the operation lever;
a cam face formed on an outer circumference of the eccentric cam, a distance from the axial center of the eccentric cam to the cam face being changed in a circumferential direction; and
an irregularity portion formed on the cam face of the eccentric cam,
wherein when the operation lever is operated, the cam mechanism moves the fastening rod so as to fasten and clamp the column by the attaching bracket at a desired tilt position and the irregularity portion comes into contact with the attaching bracket so as to regulate an upward movement of the column.
